# EUROPEAN PATENT SPECIFICATION

(11) **EP 3 244 763 B1**
(45) Date of publication and mention of the grant of the patent: **05.03.2025**
(21) Application number: 16701389.5
(22) Date of filing: 12.01.2016
(51) Int. Cl.: A43B 1/04, A43B 5/00, A43B 13/14, A43B 13/22, B29D 35/12

(54) **KNITTED COMPONENT WITH CLEAT MEMBER**
GESTRICKTE KOMPONENTE MIT STOLLENELEMENT
ÉLÉMENT TRICOTÉ AVEC ÉLÉMENT DE CRAMPON

(30) Priority: 16.01.2015 US 201514598433; 16.01.2015 US 201514598389; 16.01.2015 US 201514598406
(43) Date of publication of application: 22.11.2017
(73) Proprietor: NIKE Innovate C.V., Beaverton, OR 97005 (US)
(72) Inventor: CROSS, Tory M., Beaverton, OR 97005 (US); PODHAJNY, Daniel A., Beaverton, OR 97005 (US)
(74) Representative: Prinz & Partner mbB
(86) International application number: PCT/US2016/013078
(87) International publication number: WO 2016/115157

(56) References cited:
- EP-A1- 2 792 261
- EP-A2- 2 792 265
- WO-A1-2009/149886
- GB-A- 2 063 054
- US-A1- 2013 091 741

## Description

### BACKGROUND

Conventional articles of footwear generally include two primary elements, an upper and a sole structure. The upper is secured to the sole structure and forms a void on the interior of the footwear for comfortably and securely receiving a foot. The sole structure is secured to a lower area of the upper, thereby being positioned between the upper and the ground. In athletic footwear, for example, the sole structure may include a midsole and an outsole. The midsole often includes a polymer foam material that attenuates ground reaction forces to lessen stresses upon the foot and leg during walking, running, and other ambulatory activities. Additionally, the midsole may include fluid-filled chambers, plates, moderators, or other elements that further attenuate forces, enhance stability, or influence the motions of the foot. The outsole is secured to a lower surface of the midsole and provides a ground-engaging portion of the sole structure formed from a durable and wear-resistant material, such as rubber. The sole structure may also include a sockliner positioned within the void and proximal a lower surface of the foot to enhance footwear comfort.

The upper generally extends over the instep and toe areas of the foot, along the medial and lateral sides of the foot, under the foot, and around the heel area of the foot. In some articles of footwear, such as basketball footwear and boots, the upper may extend upward and around the ankle to provide support or protection for the ankle. Access to the void on the interior of the upper is generally provided by an ankle opening in a heel region of the footwear. A lacing system is often incorporated into the upper to adjust the fit of the upper, thereby permitting entry and removal of the foot from the void within the upper. The lacing system also permits the wearer to modify certain dimensions of the upper, particularly girth, to accommodate feet with varying dimensions. In addition, the upper may include a tongue that extends under the lacing system to enhance adjustability of the footwear, and the upper may incorporate a heel counter to limit movement of the heel.

Articles of footwear often are constructed of many components. For example, an article of footwear may include many components, such as an upper, a sockliner, a strobel, a midsole, and an outsole. An outsole may have spikes, cleats, or other protrusions to provide additional traction under selected circumstances. Each of these components is attached to at least one, typically two, and maybe three or more of the other components. Some components thus are stitched to, adhered to, or otherwise attached to other components.

Construction of an article of footwear comprising many components may require that components having significantly different properties and characteristics must be attached to each other. For example, an upper may be formed from cloth, a midsole from soft foam, and an outsole from wear-resistant rubber. These components often can be adhered with adhesives. Adhesive may fail, causing delamination of the components. Further, wear may occur at joints between harder and softer materials, or between dissimilar materials. Therefore, such joints may cause premature failure of the article of footwear. Such joints also may provide uncomfortable sudden transitions between areas of softer or more compliant materials and areas of harder or more rigid materials.

Further, assembly of multiple components may be time-consuming and may lead to errors. For example, components from one style of an article of footwear may incorrectly be used on a different style of footwear. The number of potential errors and premature failures may be significant.

A variety of material elements (e.g., textiles, polymer foam, polymer sheets, leather, synthetic leather) are conventionally utilized in manufacturing an article of footwear. In athletic footwear, for example, the upper may have multiple layers that each include a variety of joined material elements. As examples, the material elements may be selected to impart stretch-resistance, wear-resistance, flexibility, air-permeability, compressibility, comfort, and moisture-wicking to different areas of the upper. Similarly, the sole structure may utilize a number of components to provide selected properties and characteristics. To impart the different properties to different areas of the article of footwear, material elements are often cut to desired shapes and then joined together, usually with stitching or adhesive bonding. Moreover, the material elements often are joined in a layered configuration to impart multiple properties to the same areas. As the number and type of material elements incorporated into the article of footwear increases, the time and expense associated with transporting, stocking, cutting, and joining the material elements also may increase. Waste material from cutting and stitching processes also accumulates to a greater degree as the number and type of material elements incorporated into the article of footwear increases. Moreover, articles of footwear with a greater number of material elements may be more difficult to recycle than articles of footwear formed from fewer types and numbers of material elements. By decreasing the number of material elements utilized in the article of footwear, therefore, waste may be decreased while increasing the manufacturing efficiency and recyclability of the upper.

GB 2 063 054 A discloses a material having non-slip characteristics which is formed by moulding an elastomeric material around at least one layer of metal fabric knitted from at least one strand of metal, such as steel wool. Such material is particularly suitable for shoe soles, which soles may contain a plurality of layers of knitted metal fabric, and optionally have studs containing rolls of knitted metal fabric.

EP 2 792 261 A1 discloses a shoe comprising an upper and an outer sole and/or a midsole which is connected to the upper, the outer sole and/or the midsole comprising knitwear.

Reducing the number of material elements may require that one material element provide multiple and additional properties and characteristics sought by users. Thus, there exists a need in the art for articles of footwear comprising a minimum number of material elements while providing a number of properties and characteristics sought by users.

### BRIEF SUMMARY

An article of footwear is provided according to the subject matter of claim 1.

The cleat member may be configured to contact the ground.

The knitted component may form a knit outsole, the knit outsole comprising the cleat member.

The article of footwear may have an insert member disposed in an interior of the upper, the insert member having a protuberance extending into a cavity formed by the cleat member.

The knitted component may include a fusible yarn.

The sole system may have a cleat cover element covering at least a portion of the cleat member of the knitted component.

The lower portion of the knitted component comprises an inlaid tensile element.

The inlaid tensile element is located adjacent the cleat member.

A sole system is provided according to the subject matter of claim 6.

The ground-facing surface is configured to contact the ground.

The sole system may have a top surface configured to be affixed to an upper formed separately from the sole system.

The sole system may include a fusible yarn.

Each cleat member of the plurality of cleat members may include a cavity filled with a reinforcing material.

The knitted component has at least one tensile element inlaid within the knitted component and which is positioned adjacent to at least one cleat member of the plurality of cleat members. According to the claimed invention, at least one tensile element may include a tensile element loop configured to permit the adjustment of the at least one tensile element within the knitted component.

A method of manufacturing a sole system is provided according to the subject matter of claim 11.

The method may further include inserting an insert member within an upper of the article of footwear such that a protrusion extending from the insert member is received by a cavity of the cleat member.

A vacuum forming process may form the lower portion of the knitted component around an insert member having a protuberance to form the cleat member.

The method may include injecting a reinforcing material into a cavity of the cleat member.

The method may include inserting the knitted component into a mold prior to the step of injecting the reinforcing material into the cavity of the cleat member.

### BRIEF DESCRIPTION OF THE DRAWINGS

The claimed invention can be better understood with reference to the following drawings and description. The components in the figures are not necessarily to scale, emphasis instead being placed upon illustrating the principles of the invention. Moreover, in the figures, like reference numerals designate corresponding parts throughout the different views.
FIG. 1 is an isometric view of an exemplary embodiment of an article of footwear including a knit sole system;
FIG. 2 is a lateral side view of the exemplary embodiment of an article of footwear including a knit sole system;
FIG. 3 is a medial side view of the exemplary embodiment of an article of footwear including a knit sole system;
FIG. 4 is an underside view of the exemplary embodiment of an article of footwear including a knit sole system;
FIG. 5 is an exploded view of the exemplary embodiment of an article of footwear including a knit sole system with an insert member;
FIG. 6 is a schematic view of the exemplary embodiment of an article of footwear upper shown in phantom with an insert member disposed within the knit sole system;
FIG. 7 is a cross-sectional view of the exemplary embodiment of an article of footwear including a knit sole system with an insert member;
FIG. 8 is a schematic flowchart of an exemplary process for manufacturing an article of footwear including a knit sole system;
FIG. 9 is a representational view of an exemplary process of vacuum forming a knit sole system for an article of footwear incorporating a knitted component;
FIG. 10 is a representational view of a vacuum press for vacuum forming a knit sole system;
FIG. 11 is a representational view of a vacuum press including a last with an insert member for vacuum forming a knit sole system;
FIG. 12 is a representational view of a vacuum press having a knitted component being placed over the last for vacuum forming a knit sole system;
FIG. 13 is a representational view of a knitted component disposed in a last in a vacuum press for vacuum forming a knit sole system;
FIG. 14 is a representational view of a vacuum press closing over a last having the knitted component for vacuum forming a knit sole system;
FIG. 15 is a representational view of a closed vacuum press for vacuum forming a knit sole system;
FIG. 16 is a representational view of a vacuum press applying vacuum pressure to a knitted component for vacuum forming a knit sole system;
FIG. 17 is a representational view of a vacuum press being removed from a vacuum formed knit sole system;
FIG. 18 is an exploded view of an exemplary embodiment of cap elements disposed on cleat members of a knit sole system;
FIG. 19 is a cross-sectional view of an exemplary embodiment of an article of footwear including a knit sole system with cap elements on cleat members;
FIG. 20 is a cross-sectional view of an alternate embodiment of a cap element for a cleat member of a knit sole system;
FIG. 21 is a cross-sectional view of another alternate embodiment of a cap element for a cleat member of a knit sole system;
FIG. 22 is a cross-sectional view of another alternate embodiment of a cap element for a cleat member of a knit sole system;
FIG. 23 is a cross-sectional view of another alternate embodiment of a cap element with a tiered arrangement for a cleat member of a knit sole system;
FIG. 24 is an exploded view of an exemplary embodiment of an outsole cover assembly for a knit sole system of an article of footwear;
FIG. 25 is an isometric view of the exemplary embodiment of an outsole cover assembly for a knit sole system of an article of footwear;
FIG. 26 is a cross-sectional view of the exemplary embodiment of an outsole cover assembly for a knit sole system of an article of footwear taken along line 26-26 in FIG. 25;
FIG. 27 is a bottom view of an exemplary embodiment of an article of footwear before a foot-enclosing portion is formed;
FIG. 28 is a perspective view of the bottom of an exemplary embodiment of the article of footwear of FIG. 27 as the foot-enclosing portion is formed;
FIG. 29 is a perspective view of an exemplary embodiment of the completed article of footwear of FIG. 27 and FIG. 28;
FIG. 30 is an exploded view of an exemplary embodiment of an article of footwear in use;
FIG. 31 is a schematic diagram of an exemplary embodiment of a method of making an article of footwear;
FIG. 32 is a perspective view of a knitting process using conventional feeders;
FIG. 33 is a perspective view of a knitting process using conventional feeders;
FIG. 34 is a perspective view of an exemplary embodiment of a knitted component;
FIG. 35 is a view of a mold and a knitted component to be molded to form cleat members;
FIG. 36 is a view of a mold and a knitted component to be molded by injecting material to form cleat members;
FIG. 37 is a view of a mold closed on a knitted component to form cleat members;
FIG. 38 is a perspective view of a molded knitted component removed from the mold;
FIG. 39 is a perspective view of an outsole having molded cleat members;
FIG. 40 illustrates a relationship between the outsole of FIG. 17 and an upper;
FIG. 41 illustrates an assembled article of footwear, with the upper attached to the outsole;
FIG. 42 is a perspective view of the bottom of a knitted component of FIG. 17;
FIG. 43 is a comparison of cleat members that are stamped or stretched into a knitted component and cleat members that are knitted, including a close up of resultant knit pattern on the cleat members;
FIG. 44 is a perspective view of a preparation for reinforcing cleat members;
FIG. 45 is a perspective view of a method for reinforcing cleat members;
FIG. 46 is a perspective view of a knit outsole with reinforced cleat members;
FIG. 47 is cross-sectional view of the reinforced cleats at line 25-25 of FIG. 24;
FIG. 48 is a perspective view of a midsole with protrusions to register with ground-engaging cleat members of a knit outsole;
FIG. 49 is a perspective view of a knit outsole with a midsole;
FIG. 50 is cross-sectional view of the filled cleats at line 28-28 of FIG. 26;
FIG. 51 is a comparison of tensile elements that apply force in different directions, including a close-up of relevant knit patterns;
FIG. 52 is a view of a section of a knitted component including a tensile element;
FIG. 53 is a view of the section of a knitted component illustrated in FIG. 52, wherein a tensile element is pulled to create more tension in the tensile element;
FIG. 54 is a view of a section of a knitted component wherein a tensile element is pulled toward another tensile element to create tension; and
FIG. 55 is a view of a section of FIG. 54 wherein the other tensile element is pulled to form a loop that is secured under another tensile element.

### DETAILED DESCRIPTION

The following discussion and accompanying Figures disclose a variety of concepts relating to knitted components and the manufacture of knitted components. Although the knitted components may be utilized in a variety of products, an article of footwear that incorporates one of the knitted components is disclosed below as an example. The description will be directed in detail to an article of footwear. However, in addition to footwear, the knitted components may be utilized in other types of apparel (e.g., gloves or mittens) where the ability to securely grip an object may be enhanced by protuberances. Accordingly, the knitted components and other concepts disclosed herein may be incorporated into a variety of products for both personal and industrial purposes.

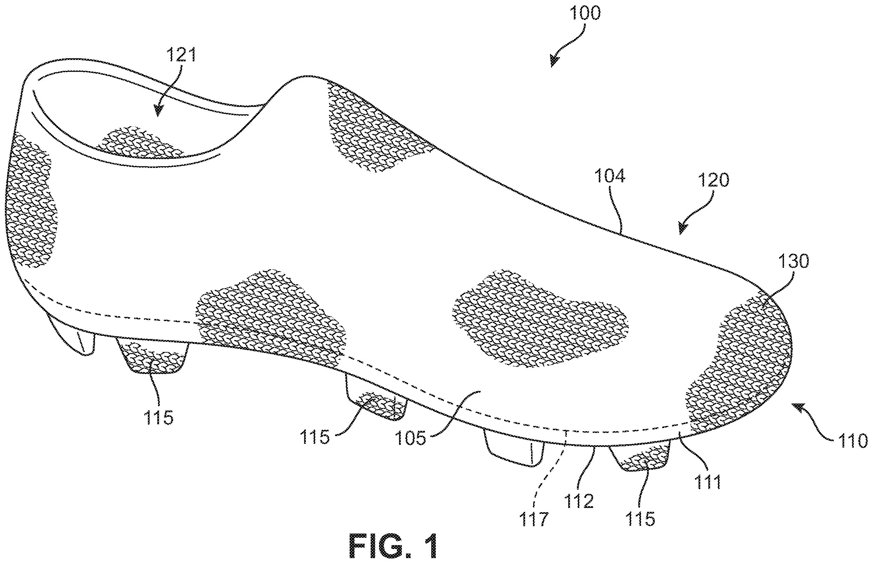

FIGS. 1 through 26 illustrate exemplary embodiments of an article of footwear having an upper and a knit sole system incorporating a knitted component and the associated method of manufacturing. The upper and knit sole system incorporate a knitted component that is vacuum-formed to produce a knit outsole having cleat members. The individual features of any of the knitted components described herein may be used in combination or may be provided separately in different configurations for articles of footwear.

For consistency and convenience, directional adjectives are employed throughout this detailed description corresponding to the illustrated embodiments. The term "longitudinal" as used throughout this detailed description and in the claims refers to a direction extending a length or major axis of an article. In some cases, the longitudinal direction may extend from a forefoot region to a heel region of the article. Also, the term "lateral" as used throughout this detailed description and in the claims refers to a direction extending a width or minor axis of an article. In other words, the lateral direction may extend between a medial side and a lateral side of an article. Furthermore, the term "vertical" as used throughout this detailed description and in the claims refers to a direction generally perpendicular to a lateral and longitudinal direction. For example, in cases where an article is planted flat on a ground surface, the vertical direction may extend from the ground surface upward. It will be understood that each of these directional adjectives may be applied to individual components of an article, including an upper, a knitted component and portions thereof, and/or a sole system.

FIGS. 1 through 7 illustrate an exemplary embodiment of an article of footwear 100, also referred to simply as article 100. In some embodiments, article of footwear 100 may include a sole system 110 and an upper 120. Although article 100 is illustrated as having a general configuration suitable for enhanced traction, concepts associated with article 100 may also be applied to a variety of athletic footwear types, including soccer shoes, baseball shoes, basketball shoes, cycling shoes, football shoes, tennis shoes, training shoes, walking shoes, and hiking boots, for example. The concepts may also be applied to footwear types that are generally considered to be non-athletic, including dress shoes, loafers, sandals, and work boots. Accordingly, the concepts disclosed with respect to article 100 may be applied to a wide variety of footwear types.

For reference purposes, article 100 may be divided into three general regions: a forefoot region 101, a midfoot region 102, and a heel region 103. Forefoot region 101 generally includes portions of article 100 corresponding with the toes and the joints connecting the metatarsals with the phalanges. Midfoot region 102 generally includes portions of article 100 corresponding with an arch area of the foot. Heel region 103 generally corresponds with rear portions of the foot, including the calcaneus bone. Article 100 also includes a lateral side 104 and a medial side 105, which extend through each of forefoot region 101, midfoot region 102, and heel region 103 and correspond with opposite sides of article 100. More particularly, lateral side 104 corresponds with an outside area of the foot (i.e., the surface that faces away from the other foot), and medial side 105 corresponds with an inside area of the foot (i.e., the surface that faces toward the other foot). Forefoot region 101, midfoot region 102, heel region 103, lateral side 104, and medial side 105 are not intended to demarcate precise areas of article 100. Rather, forefoot region 101, midfoot region 102, heel region 103, lateral side 104, and medial side 105 are intended to represent general areas of footwear 100 to aid in the following discussion. In addition to article 100, forefoot region 101, midfoot region 102, heel region 103, lateral side 104, and medial side 105 may also be applied to sole system 110, upper 120, and individual elements thereof.

Embodiments of the disclosure provide a sole system for an article of footwear. The sole system includes a knitted component incorporating a one-piece knit outsole. The knit outsole has a ground-facing side and a top side. A protruding ground-engaging cleat member is formed on the ground-facing side of the knit outsole. The ground-engaging cleat member has a surface comprising a knitted textile that engages the ground.

In some embodiments, article 100 may include sole system 110 and upper 120 that are formed from portions of a knitted component incorporated into article 100. The sole system 110 and upper 120 may be formed of unitary knit construction from a knitted component so as to form a one-piece element that includes sole system 110 and upper 120. A portion of the knitted component may form a knit outsole of sole system 110 and another portion of the knitted component may form the majority of upper 120.

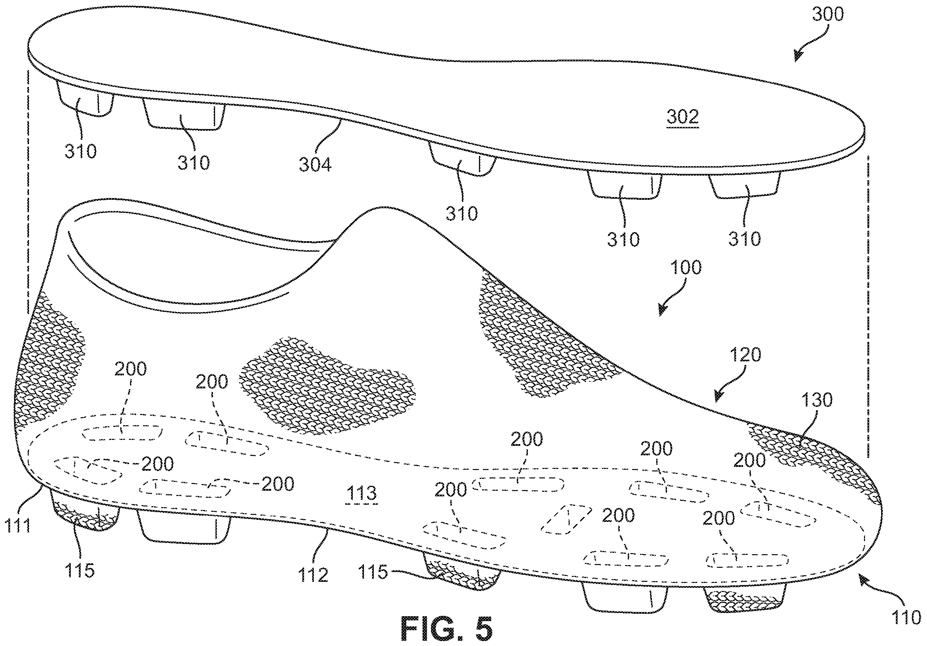

Sole system 110 is secured to upper 120 and extends between the foot and the ground when article 100 is worn. In an exemplary embodiment, the primary element of sole system 110 is a knitted component lower portion 111 that forms a knit outsole 112 through a vacuum forming process, as further detailed below. Knit outsole 112 includes an outsole top surface or side 113 (see FIG. 5), an outsole bottom surface or side 114. In some embodiments, sole system 110 may include one or more protuberances or projections that may assist with providing traction to article 100. Knit outsole 112 includes a plurality of ground-engaging cleat members 115 that extend outward from outsole bottom surface 114 in the vertical direction towards a ground surface.

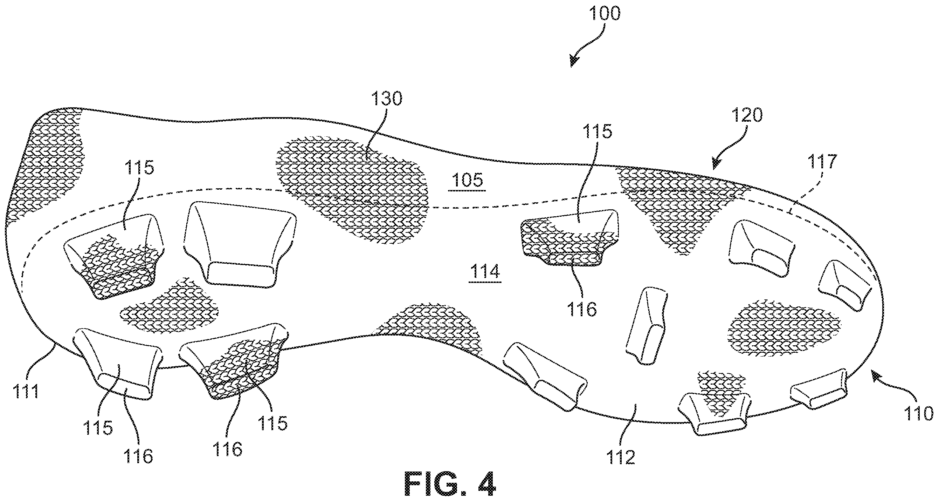

Knitted component lower portion 111 forming knit outsole 112 is of unitary knit construction with the lower areas of upper 120. In one embodiment, knit outsole 112 and upper 120 may be formed from different portions of a single one-piece knitted component. Outsole top surface or side 113 is located on the top surface of knit outsole 112, and is positioned to extend under a lower surface of the foot. Outsole bottom surface or side 114 comprises the outer bottom ground-facing surface of sole system 110 and the bottom surface of article of footwear 100. Referring now to FIG. 4, outsole bottom surface or side 114 faces away from the foot, and is ground-engaging if ground-engaging cleat member 115 becomes embedded in the ground. Ground-engaging cleat members 115 protrude from outsole bottom surface 114 and include a cleat face 116 at a distal end that is oriented approximately parallel to outsole bottom surface 114. In one embodiment cleat face 116 is a knit surface of a portion of knitted component lower portion 111 that has been vacuum formed to produce cleat members 115.

With this configuration, cleat face 116 of ground-engaging cleat member 115 engages the ground first.

Additional embodiments provide a foot-enclosing sole system for an article of footwear. The sole system includes a one-piece foot-enclosing knit portion that encloses the foot and includes a knit outsole. The sole system thus includes both an outsole and an upper. The outsole and the upper may be knit together as a one piece element. The knit outsole has a ground-facing side and a top side. A ground-engaging cleat member protrudes from the ground-facing side of the outsole. The ground-engaging cleat member may include a knit surface that contacts the ground.

Upper 120 defines a void within article 100 for receiving and securing a foot relative to sole system 110. The void is shaped to accommodate the foot and extends along a lateral side of the foot, along a medial side of the foot, over the foot, around the heel, and under the foot. Access to the void is provided by an ankle opening 121 located in at least heel region 103. In further configurations, upper 120 may include additional elements, such as (a) a heel counter in heel region 103 that enhances stability, (b) a toe guard in forefoot region 101 that is formed of a wear-resistant material, (c) a collar extending around ankle opening 121, and (d) logos, trademarks, and placards with care instructions and material information.

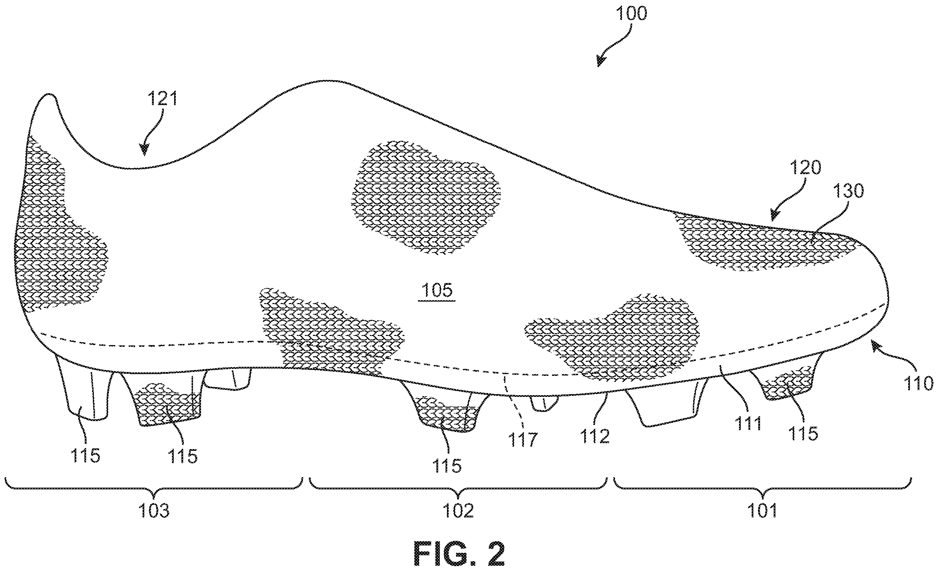

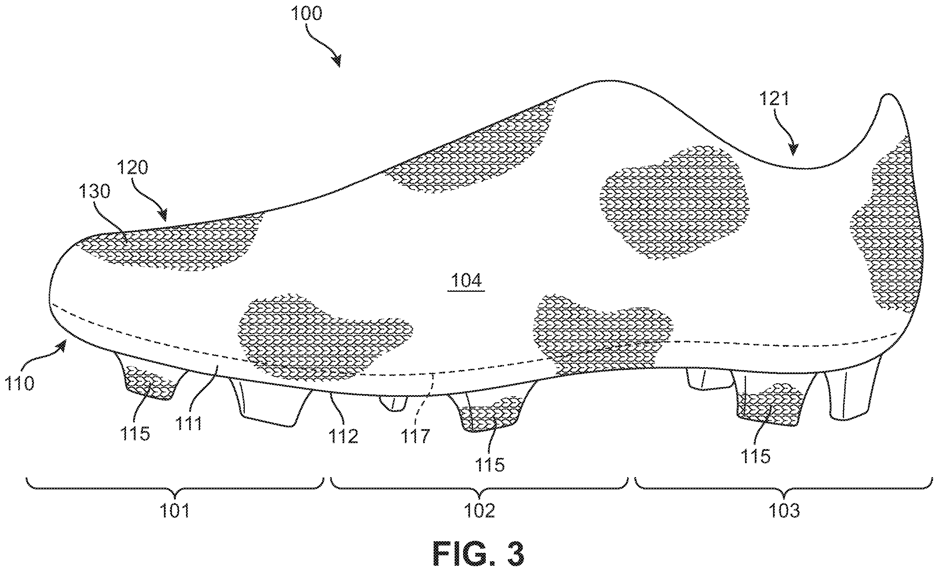

Many conventional footwear uppers are formed from multiple material elements (e.g., textiles, polymer foam, polymer sheets, leather, and synthetic leather) that are joined through stitching or bonding, for example. In contrast, in embodiments of the disclosure, a majority of upper 120 may be formed from a knitted component upper portion 130, which extends through each of forefoot region 101, midfoot region 102, and heel region 103 along both lateral side 104 (shown in FIG. 3) and medial side 105 (shown in FIG. 2), over forefoot region 101, and around heel region 103. In addition, knitted component upper portion 130 forms portions of both an exterior surface and an opposite interior surface of upper 120. As such, knitted component upper portion 130 defines at least a portion of the void within upper 120.

The disclosure provides a method of making a sole system for an article of footwear. In accordance with the method, a one-piece knitted component is knitted to include a knit outsole. A ground-engaging cleat member is formed in the ground-facing side of the knit outsole by knitting. A protruding ground-engaging cleat member may be formed by molding the knitted component. The cleat member has a ground-engaging surface comprising a knitted surface that engages the ground and may provide traction.

In some embodiments, article of footwear 100 may be formed from a one-piece knitted component that includes knitted component lower potion 111, forming knit outsole 112 of sole system 110, and knitted component upper portion 130, forming the majority of upper 120. Thus, the upper and the outsole may comprise a textile knitted together as a one-piece knit element. Forming an article of footwear as a one piece knit textile element through knitting provides significant advantages over typical articles of footwear. For example, there is no need to attach a separate outsole to an upper, thus significantly reducing the number of steps required for assembly and, therefore, the possibility of assembly errors. Also, there are no joints between the outsole and the upper at which disparate properties and characteristics of the joined materials may cause excessive wear and premature failure.

In some embodiments, upper 120 and sole system 110 are formed by a single knitted component, including knitted component lower portion 111 and knitted component upper portion 130. FIG. 1 through FIG. 7 illustrate such an embodiment, wherein upper 120 and sole system 110 comprise a single knitted component. FIG. 1 through FIG. 4 illustrate such an embodiment, wherein knitted component 130 and sole system 110 comprise a single knitted component. In these embodiments, knitted component upper portion 130 and knitted component lower portion 111 of sole system 110 are formed of unitary knit construction so as to be a one-piece knit element. Boundary 117 (which may alternatively be referred to as join 117) depicts an area of demarcation between upper 120 and sole system 110. However, for embodiments of article 100 including upper 120 and sole system 110 formed from a single knitted component that encloses the foot and includes knit outsole 112, boundary 117 may not be actually physically present or visible on article 100. That is, boundary 117 may represent an imaginary dividing line between the portions of the single knitted component that form each of upper 120 and sole system 110 and no indicia corresponding to boundary 117 may be present. In other embodiments, boundary 117 may represent a transition between types of yarns used to form each of knitted component lower portion 111 and knitted component upper portion 130.

In various embodiments, the single knitted component incorporating into article 100, including each of knitted component lower portion 111 and knitted component upper portion 130, may incorporate various types of yarn that impart different properties to separate areas of upper 120 and/or sole system 110. For example, one area or portion of knitted component upper portion 130 may be formed from a first type of yarn that imparts a first set of properties, and another area or portion of first knitted component upper portion 130 may be formed from a second type of yarn that imparts a second set of properties. In this configuration, properties may vary throughout upper 120 by selecting specific yarns for different areas of knitted component 130. Similarly, knitted component lower portion 111 of sole system 110 may be knitted from various yarns, including any of the yarns used to form knitted component upper portion 130. With this configuration, different yarns may be used to impart different properties to each of knitted component lower portion 111 and knitted component upper portion 130, as well as to different areas within each of knitted component lower portion 111 and knitted component upper portion 130.

Yarns used in embodiments of the disclosure may be selected from monofilament yarns and multifilament yarns formed from natural or synthetic materials. Multifilament yarns may be twisted or untwisted. In some embodiments, yarn may be elastic or essentially inelastic. In some embodiments, yarn may be textured or have a natural finish. Natural materials may be selected from staple materials, such as silk, cotton, and wool. Synthetic materials may be selected from polymers that can be formed into filaments. Synthetic materials include but are not limited to polyesters; polyamides, such as any of the various types of homopolymeric and co-polymeric nylon; aramides, such as Kevlar^{®} and Nomex^{®}; and urethanes, such as thermoplastic polyurethane. Fusible yarns also may be suitable for some embodiments.

In embodiments of the disclosure, the yarn used to form the article of footwear may incorporate yarns with different deniers, materials (e.g., cotton, elastane, polyester, rayon, wool, and nylon), and degrees of twist, for example. The different types of yarns may affect the physical properties of a knitted component, including aesthetics, stretch, thickness, air permeability, and abrasion-resistance. In some configurations, multiple yarns with different colors may be utilized to form the knitted component. When yarns with different colors are twisted together and then knitted, the knitted component may have a heathered appearance with multiple colors randomly distributed throughout.

At least one tensile element is inlaid or placed along any suitable area of outsole bottom surface 114. Moreover, tensile elements suitable for use with outsole bottom surface 114 may include the tensile strands or tensile elements and the method of manufacturing a knitted component incorporating tensile elements disclosed in one or more of the commonly-owned United States Application Serial Number 13/048,540 to Huffa et al., entitled "Method Of Manufacturing A Knitted Component", filed on march 15, 2011 and published as United States Patent Application Publication No. 2012/0234052 on September 20, 2012; United States Patent Number 8,490,229 to Dua et al., entitled "Article of Footwear Having An Upper Incorporating a Knitted Component", issued July 23, 2013; and United States Patent Number 8,839,532, entitled "Article Of Footwear Incorporating A Knitted Component", issued September 23, 2014.

In some embodiments, sole system 110 may be provided with additional components configured to provide support and stability to knit outsole 112. In an exemplary embodiment, sole system 110 may include an insert member 300 that is configured to be placed in relationship with knit outsole 112 from an interior of article 100. Insert member 300 may fill and provide structural support and/or rigidity for cleat members 115.

FIG. 5 illustrates an exemplary embodiment of insert member 300 shown in an exploded view positioned above article 100. Insert member 300 may be placed in relationship with knit outsole 112 to form sole system 110. Insert member 300 is disposed below a foot of wearer when placed within article 100 and includes a top side 302 that faces towards the foot and an opposite bottom side 304 that faces away from the foot. In some embodiments, knit outsole 112 includes a plurality of cavities 200 in outsole top surface 113 that correspond with and form cleat members 115. In this embodiment, cavities 200 forming cleat members 115 in knit outsole 112 may be hollow.

In an exemplary embodiment, insert member 300 may further include a plurality of protuberances 310 that extend away from bottom side 304 in a vertical direction. Protuberances 310 may be configured and designed so as to correspond with and fit within cavities 200 of knit outsole 112 to reinforce and provide support and/or rigidity to cleat members 115. In one embodiment, the location, size, and arrangement of protuberances 310 on insert member 300 may be substantially similar and correspond with the location, size, and arrangement of cavities 200 on outsole top surface 113 forming cleat members 115. With this arrangement, protuberances 310 on bottom side 304 are aligned with cavities 200 on outsole top surface 113 so that when insert member 300 is placed in relationship with knit outsole 112 within the interior of article 100, protuberances 310 substantially fill cavities 200 and provide reinforcement to cleat members 115. Additionally, insert member 300 may have an outer peripheral edge defining a shape of insert member 300 that is configured and designed to fit within the interior of upper 120 of article 100.

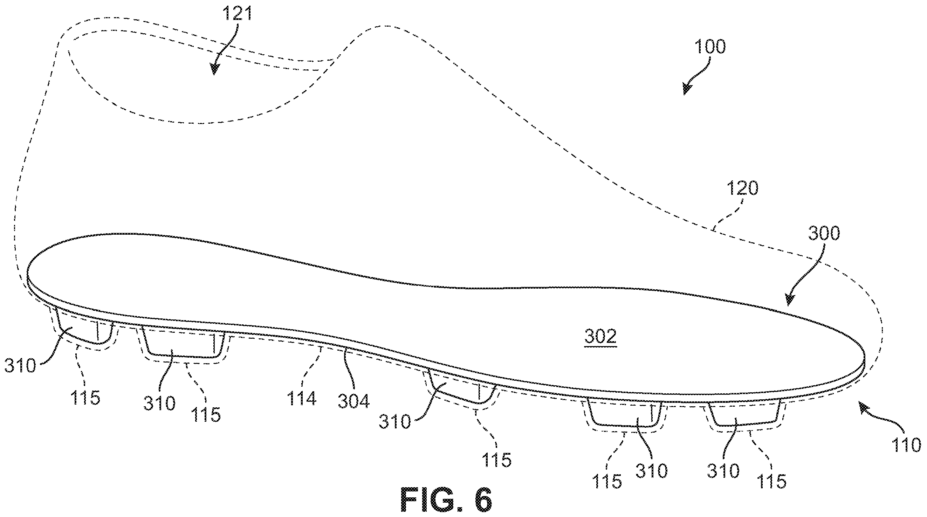

Referring now to FIG. 6, insert member 300 having protuberances 310 extending from bottom side 304 is shown in relationship with knit outsole 112. In this embodiment, knitted component upper portion 130 and knitted component lower portion 111 are shown in phantom view to illustrate the relationship of insert member 300 within knit outsole 112. As seen in FIG. 6, when insert member 300 is located within the interior of upper 120 of article 100 so that bottom side 304 is facing outsole top surface 113, protuberances 310 are aligned with and fill cavities 200 of corresponding cleat members 115.

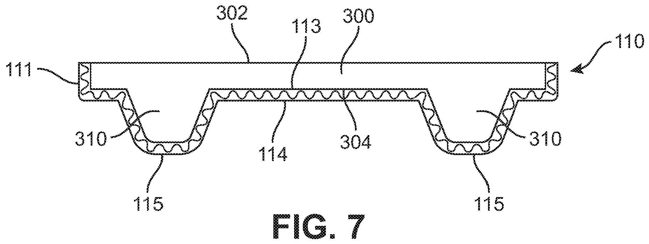

In some embodiments, insert member 300 is placed or affixed to outsole top surface 113 of knit outsole 112. A cross-sectional view shown in FIG. 7, illustrates insert member 300 in place on outsole top surface 113 of knit outsole 112. Protuberances 310 are located within and substantially fill cavities 200 to reinforce cleat members 115. Top side 302 of insert member 300 may be the foot-contacting surface and bottom side 304 faces the opposite direction towards outsole top surface 113. Outsole bottom surface 114 includes the ground-engaging cleat members 115 that are facing downward in a vertical direction away from outsole bottom surface 114. Cleat face 116 of cleat members 115 is a knit surface that may be directly in contact with the ground when article 100 is worn. Other surfaces of knit outsole 112, such as portions of outsole bottom surface 114, also may be at least partially directly in contact with the ground when article 100 is worn.

With this configuration, insert member 300 fills and provides support to cleat members 115. Insert member 300 is disposed below a foot of a wearer of article 100 and, in some embodiments, may be configured as a midsole element. That is in some embodiments, additional inserts may be provided within the interior of upper 120, such as an insole element, to provide further cushioning to a foot of a wearer. In other embodiments, insert member 300 may be used within upper 120 without any additional inserts or elements. In this way, insert member 300 can serve as both a reinforcing member for knit outsole 112 and as a cushioning or padding material for a foot of a wearer.

In various embodiments, insert member 300 may be formed from a variety of different materials. Materials for forming insert member 300 may include any suitable reinforcing material. Reinforcing materials may include compositions that provide minimal support. Such compositions may be used to tune a cushioning response. More typically, however, a reinforcing material may be selected for its rigidity and strength. The material may be foamed material, such as foamed plastic materials. For example, foamed thermoplastic polyurethane may be suitable. The density of foamed materials may be controlled to tune cushioning response. Higher density may give a more supportive response and better reinforcement of ground-engaging cleat members.

In some embodiments, insert member 300 may be monolithic or may have zones that provide additional support or resistance to twisting, for example. For example, in some embodiments, a material having a greater rigidity may be used to form protuberances 310 of insert member 300 and a material having a lesser rigidity may be used to form remaining portions of insert member 300. In some cases, portions or the entirety of insert member 300 may comprise foamed thermoplastic material. In other cases, one or more portions of insert member 300 may be formed from different materials. For example, in one embodiment, insert member 300 may comprise a zone of low-density foam, a zone of high-density foam, and a zone of unfoamed material.

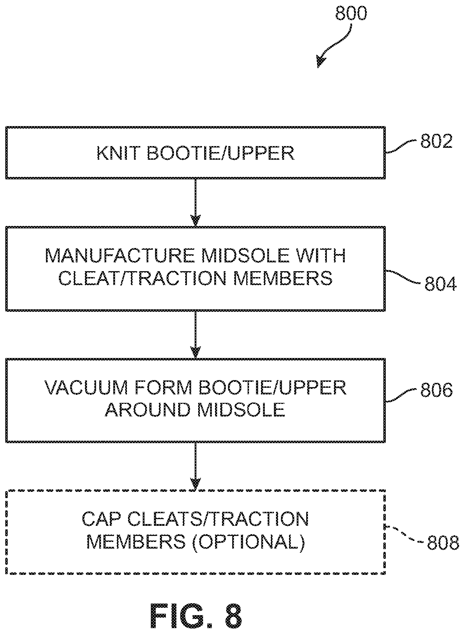

In some embodiments, an insert member disposed within the interior of upper 120 may be used during the manufacturing of an article 100 to form the shape of a knit outsole, including one or more cleat members disposed on the knit outsole. FIGS. 8 through 17 illustrate an exemplary process of vacuum forming a knitted component using an insert member to form a knit outsole. In an exemplary embodiment, insert member 300 may be used during the manufacturing of article 100 to form the shape of knit outsole 112, including plurality of cleat members 115 corresponding to the shape of protuberances 310 of insert member 300. In one embodiment, a vacuum forming process may be used to shape knitted component lower portion 111 around insert member 300 within upper 120 to form knit outsole 112.

Thus, embodiments of the disclosure provide a method of manufacturing an article of footwear with a sole system having a knit outsole. In accordance with the method, a one-piece knitted component is knitted to include a portion that is vacuum formed around an insert member to produce the knit outsole. A ground-engaging cleat member is formed in the ground-facing side of the knit outsole by vacuum forming the portion of the knitted component around the insert member having a protuberance extending away from a bottom side of the insert member. The vacuum formed cleat member may have a ground-engaging face comprising a knitted surface that engages the ground and may provide traction.

Referring now to FIG. 8, an exemplary process 800 for manufacturing an article of footwear including a knit sole system is illustrated. In one embodiment, process 800 may include one or more steps that may be repeated to form a completed article of footwear with a knit sole system. The order of the steps is exemplary, and in other embodiments, additional or different steps not shown in FIG. 8 may be included to produce an article of footwear having a knit sole system. In an initial step 802, a knitted component configured to be incorporated into the upper of the article of footwear is knit. In an exemplary embodiment, the knitted component may be knit in the configuration of a bootie, including an upper portion for extending around and covering over the top of the foot of a wearer, as well as a lower portion for extending underneath the foot of the wearer. With this configuration, the knitted component may be knit as a bootie that is a one-piece element formed of unitary knit construction that encloses the foot of a wearer.

In one embodiment, step 802 may include knitting a knitted component, including portions of a knitted component substantially similar to knitted component lower portion 111 and knitted component upper portion 130, to form a foot-enclosing knit bootie. Although knitting may be performed by hand, the commercial manufacture of knitted components is generally performed by knitting machines. An example of a knitting machine suitable for producing a knitted component includes a knitting machine having a configuration of a V-bed flat knitting machine for purposes of example, but any of the knitted components described herein may be produced on other knitting machines. The disclosure also is described in detail as it relates to knitted textiles formed by weft knitting, but textiles formed by any suitable knitting process, including but not limited to: weft knitting processes, for example, flat knitting operations or circular knitting operations; warp knitting process; or any other knitting process suitable for providing a knitted textile, may be used. In such embodiments, suitable knitting machines, for example, circular knitting machines or warp knitting machines may be used to form a foot-enclosing knit bootie of unitary knit construction at step 802.

Knitted component 111, knitted component 130, and other embodiments of foot-enclosing booties can be formed of unitary knit construction. As used herein, the term "unitary knit construction" means that the respective component is formed as a one-piece element through a knitting process. That is, the knitting process substantially forms the various features and structures of unitary knit construction without the need for significant additional manufacturing steps or processes. A unitary knit construction may be used to form a knitted component having structures or elements that include, in the case of weft knitting, one or more courses of yarn or other knit material that are joined such that the structures or elements include at least one course in common (i.e., sharing a common yarn) and/or include courses that are substantially continuous between each of the structures or elements, or that include, in the case of warp knitting, one or more wales of yarn or other knit material that are joined such that the structures or elements include at least one wale in common (i.e., sharing a common yarn) and/or wales that are substantially continuous between each of the structures or elements. With this arrangement, a one-piece element of unitary knit construction is provided.

Examples of various configurations of knitted components and methods for forming knitted components with unitary knit construction are disclosed in U.S. Patent Number 6,931,762 to Dua; U.S. Patent Number 7,347,011 to Dua, et al.; U.S. Patent Application Publication 2008/0110048 to Dua, et al.; U.S. Patent Application Publication 2010/0154256 to Dua; and U.S. Patent Application Publication 2012/0233882 to Huffa, et al.. Knitted component lower portion 111, knitted component upper portion 130, and other embodiments of foot-enclosing knit booties remain formed of unitary knit construction when other elements, such as logos, trademarks, placards with care instructions or other information, such as material information and size, tensile or structural elements, are added following the knitting procedure.

In some embodiments, a knitted component for forming a knit sole system may include areas knit using durable yarns and/or fusible yarns. Durable yarns and/or fusible yarns typically may provide the wear resistance users likely will prefer to have in ground-engaging areas and areas of the knit sole system that are likely to experience greater wear. For example, the outer surface of the knit sole system comprises a knitted textile, but is likely to experience greater wear because the surface faces the ground and is, at least in part, adjacent ground-engaging cleat members that are configured to be in contact with a ground surface. Further, fusible yarns may provide not only excellent wear resistance, but also support for the bottom of the foot when activated. Strands of fusible yarn may, when heated, fuse to form an impermeable mass and may also impart rigidity to the knitted component.

Cleat members 115 formed in knit outsole 112 may incorporate fusible yarns into knitted component lower portion 111 to impart rigidity to knit outsole 112. Fusible yarns incorporated into a knitted component may further assist with allowing the knit outsole to retain the shape of inert member used during the vacuum forming process 800 to shape the knit outsole. Fusible yarns also may provide a highly water resistant surface that helps keep the interior of the article of footwear free of water that otherwise would enter the article of footwear from the outside.

Next, at step 804, an insert member, including an insert member substantially similar to insert member 300, described above, may be manufactured. In one embodiment of step 804, the insert member may include a midsole, however, as noted above, in other embodiments, the insert member may be used with additional elements, for example, an insole element, or may be used alone and take the place of an insole element or other components. During step 804, the insert member may be manufactured with a plurality of protuberances that will be used to form the various cleat members or traction elements of the knit outsole.

After a suitable midsole insert member has been made at step 802 with the desired location, size, and arrangement of protuberances for forming cleat members on the knit outsole, the midsole insert member may be placed inside the foot-enclosing knit bootie. At step 806, the foot-enclosing knit bootie is vacuum formed around the foot-enclosing knit bootie to shape the knit outsole.

In some embodiments, an additional optional step 808 may be included in process 800 to provide protection to ground-engaging surfaces of the formed cleat members of the knit outsole. In this embodiment, step 808 includes a step of applying a cap element to the cleat member. As will be further described below, the cap element may provide protection to the knit surface of the cleat face, including cleat face 116, that engages the ground surface. The cap element may also be configured to provide enhanced traction to the knit outsole.

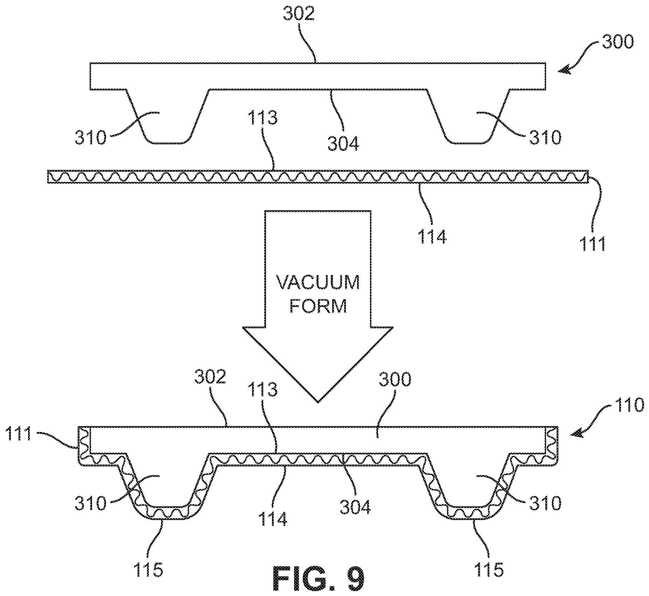

Referring now to FIG. 9, a representational view of step 806 of process 800 of vacuum forming a knit sole system for an article of footwear incorporating a knitted component is illustrated. As shown in this embodiment, knitted component lower portion 111 is vacuum formed around insert member 300 to form knit outsole 112. In an exemplary embodiment, bottom side 304 of insert member 300 includes protuberances 310 that will be used to form cavities 200 of cleat members 115 on knit outsole 112. In this embodiment, bottom side 304 of insert member 300 is brought in relation with outsole top surface 113 of knitted component lower portion 111.

Once insert member 300 and knitted component lower portion 111 are brought in relation with each other, a vacuum forming process may be applied to shape knitted component lower portion 111 around bottom side 304 of insert member 300, including the shape of protuberances 310. Once vacuum formed, knitted component lower portion 111 forms knit outsole 112, including cleat members 115 extending from outsole bottom surface 114.

In some embodiments, fusible yarn may be knitted in this area, for example, at least on portions of knitted component 111 aligned with and corresponding to protuberances 310 for forming ground-engaging cleat members 115. Fusible yarn may be optionally heated at step 806 to soften the outer surfaces of the yarn to assist with conforming to the shape of insert member 300 and protuberances 310. Upon cooling, fusible yarn may also provide additional rigidity and assist with retaining the shape of cleat member 115. Alternatively, a stiffening resin or plastic may be applied and activated and cured or heated at step 806 to assist with rigidity and/or shape retention.

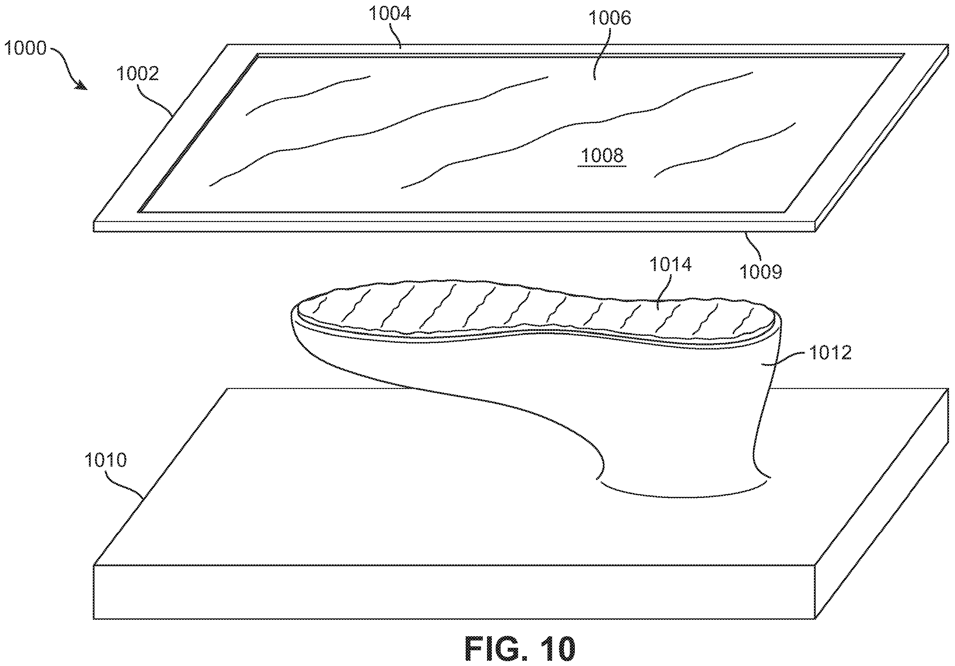

FIGS. 10 through 17 illustrate various steps of the process of vacuum forming described generally with reference to step 806 of process 800. In this process, additional or different steps may be performed during the vacuum forming process without detracting from the principles of the exemplary process described herein.

Referring now to FIG. 10, an exemplary embodiment of a vacuum press 1000 suitable for performing the vacuum forming process is illustrated. In this embodiment, vacuum press 1000 includes a moveable portion 1002 and a base portion 1010. Moveable portion 1002 is configured to move between an open and closed position in relation with base potion 1010 and allows an article to be placed on base portion 1010 for the vacuum forming process. In other embodiments, however, other configurations of a vacuum press with a different arrangement or different components may be used.

In an exemplary embodiment, moveable portion 1002 of vacuum press 1000 includes a support 1004 surrounding and holding in place a flexible membrane 1006. In some cases, flexible membrane 1006 may be any suitable flexible material, including, for example, silicone or rubber. In other cases, different flexible materials may be used. In addition, in some embodiments where heat is applied during the vacuum forming process, flexible membrane 1006 may further include heating elements or other mechanisms for providing heat to flexible membrane 1006. In this embodiment, flexible membrane 1006 includes an outside surface 1008 and an opposite inside surface 1009. Inside surface 1009 is configured to contact an article during the vacuum forming process and faces downward towards base portion 1010 of vacuum press 1000.

In some embodiments, base portion 1010 may include features configured to assist with holding an article in place in vacuum press 1000 during the vacuum forming process. In an exemplary embodiment, where an article of footwear, for example, article 100, is being vacuum formed, base portion 1010 may include a last 1012 that is configured to receive an upper or bootie of an article of footwear. In this embodiment, last 1012 is arranged with a bottom surface 1014 oriented in an upwards direction away from base portion 1010 and facing towards inside surface 1009 of flexible membrane 1006. With this arrangement, a bottom portion of an upper or bootie that is configured to extend under the foot of a wearer can be placed on bottom surface 1014 of last 1012 to assist with forming the knit outsole.

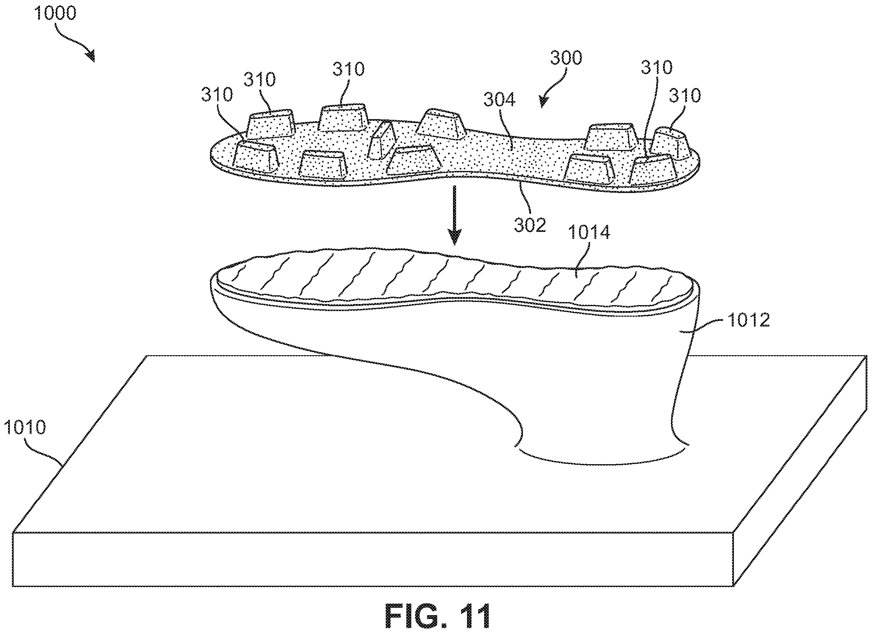

Referring now to FIG. 11, insert member 300 is shown being placed onto bottom surface 1014 of last 1012 in preparation of vacuum forming the knit outsole using vacuum press 1000. As shown in this embodiment, top side 302 of insert member 300 is placed onto bottom surface 1014 of last 1012 such that bottom side 304 of insert member 300 that includes protuberances 310 is facing upwards away from base portion 1010 of vacuum press 1000. With this arrangement, last 1012 may be ready to receive an upper or bootie of an article of footwear for the vacuum forming process of a knit outsole.

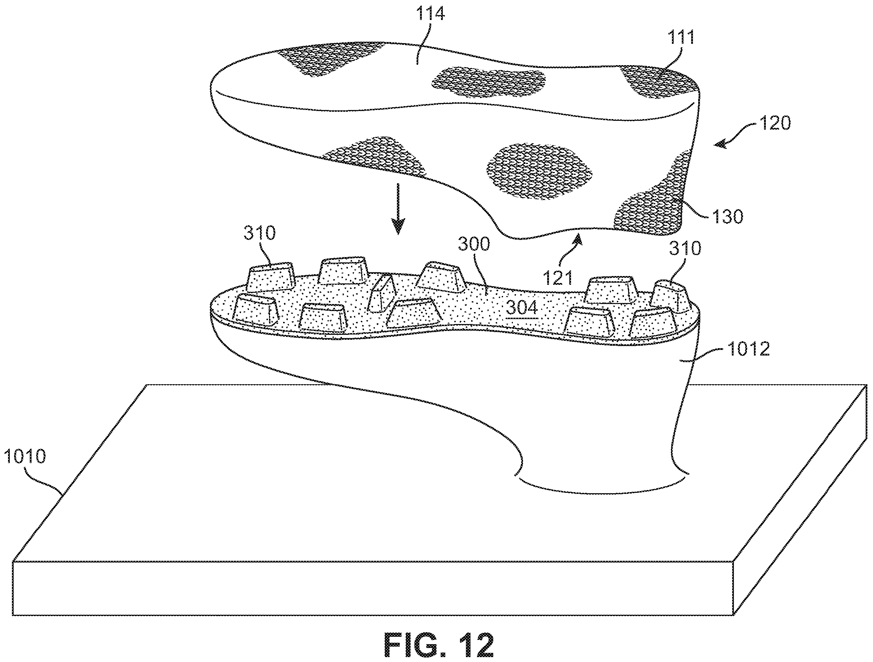

Next, as shown in FIG. 12, upper 120 that includes knitted component upper portion 130 and knitted component lower portion 111 formed of unitary knit construction so to form a one-piece foot-enclosing bootie is prepared for the vacuum forming process. In an exemplary embodiment, upper 120 is placed in an inverted position over last 1012 having insert member 300 disposed on bottom surface 1014, as described above in reference to FIG. 11. In one embodiment, ankle opening 121 may facilitate placement of upper 120 over last 1012 such that insert member 300 may be located within the interior of upper 120.

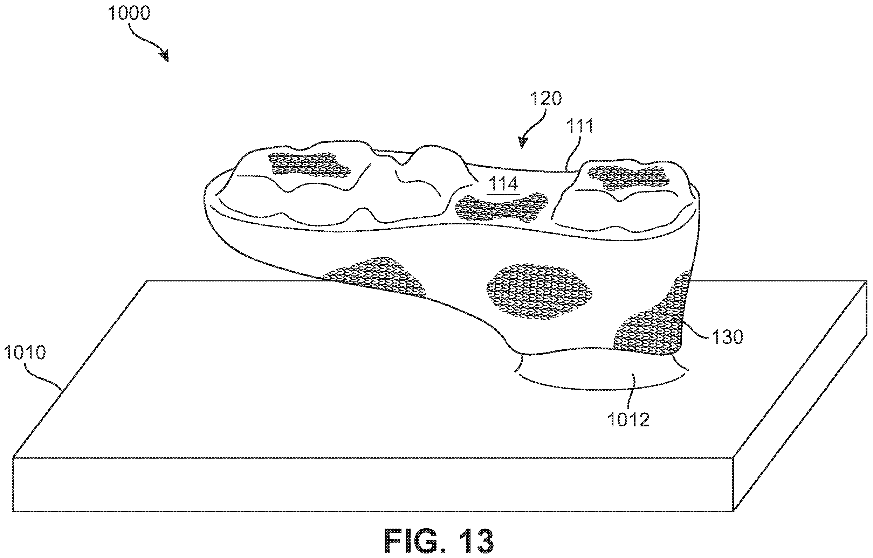

Referring now to FIG. 13, upper 120 has been placed over last 1012 having insert member 300 disposed on bottom surface 1014. In this configuration, bottom side 304 of insert member 300 that includes protuberances 310 is placed in loose relation with outsole top surface or side 113 within the interior of upper 120. Outsole bottom surface or side 114 of knitted component lower portion 111 faces outwards away from base portion 1010 of vacuum press 1000. As shown in FIG. 13, protuberances 310 on insert member 300 may form loose mounds or lumps in outsole bottom surface 114 of knitted component lower portion 111 prior to the application of the vacuum forming step.

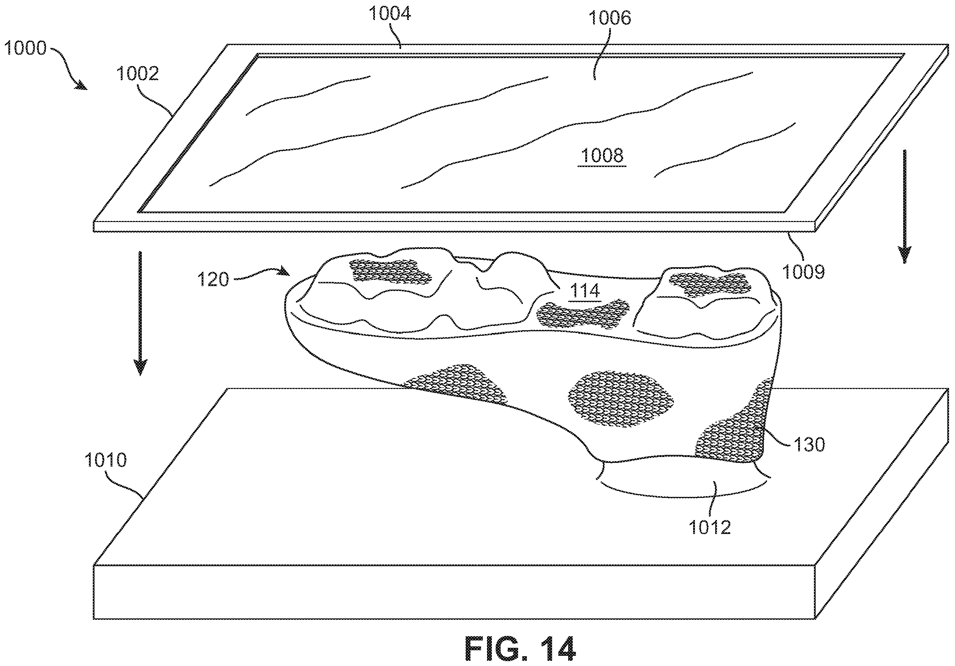

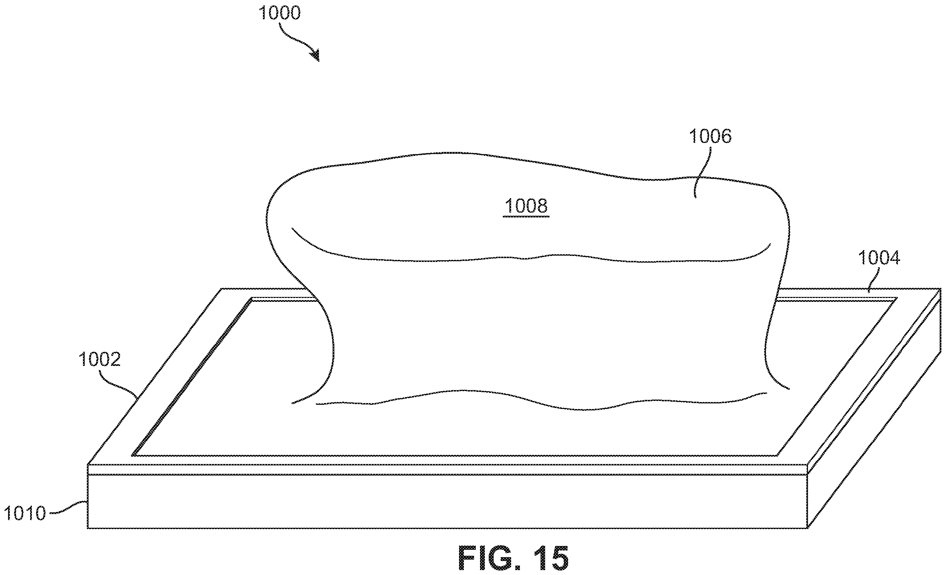

Next, FIG. 14 illustrates moveable portion 1002 of vacuum press 1000 being moved towards base portion 1010 to place vacuum press 1000 in a closed position before application of the vacuum forming step. As shown in this embodiment, inside surface 1009 of flexible membrane 1006 is being brought towards outsole bottom surface 114 arranged on last 1012. FIG. 15 illustrates vacuum press 1000 in a closed position with moveable portion 1002 brought into contact with base portion 1010. Together, moveable portion 1002 and base portion 1010 form a seal with flexible membrane 1006 disposed around and covering last 1012. As shown in FIG. 15, outside surface 1008 of flexible membrane 1006 extends upwards and away from base portion 1010 where last 1012 having upper 120 placed thereon is located. In this embodiment, vacuum press 1000 is prepared for the application of the vacuum forming process.

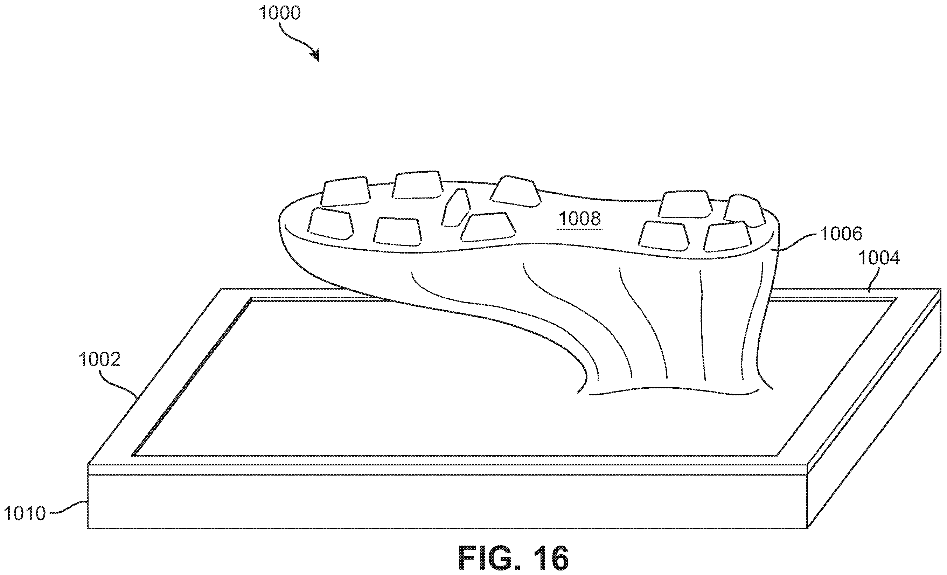

FIG. 16 illustrates a representation of the vacuum forming process using vacuum press 1000 on last 1012 having upper 120 placed thereon. As shown in this embodiment, the application of a vacuum within the interior of vacuum press 1000 between moveable portion 1002 and base portion 1010 draws flexible membrane 1006 down towards base portion 1010. With this configuration, inside surface 1009 of flexible membrane 1006 exerts pressure onto upper 120 placed upon last 1012, including insert member 300 located on bottom surface 1014 of last 1012. Accordingly, the pressure of the vacuum forming process causes knitted component lower portion 111 of upper 120 on last 1012 to be drawn down onto bottom side 304 of insert member 300 that includes protuberances 310. In some embodiments, heat also may be applied during the vacuum forming process along with the pressure from the vacuum.

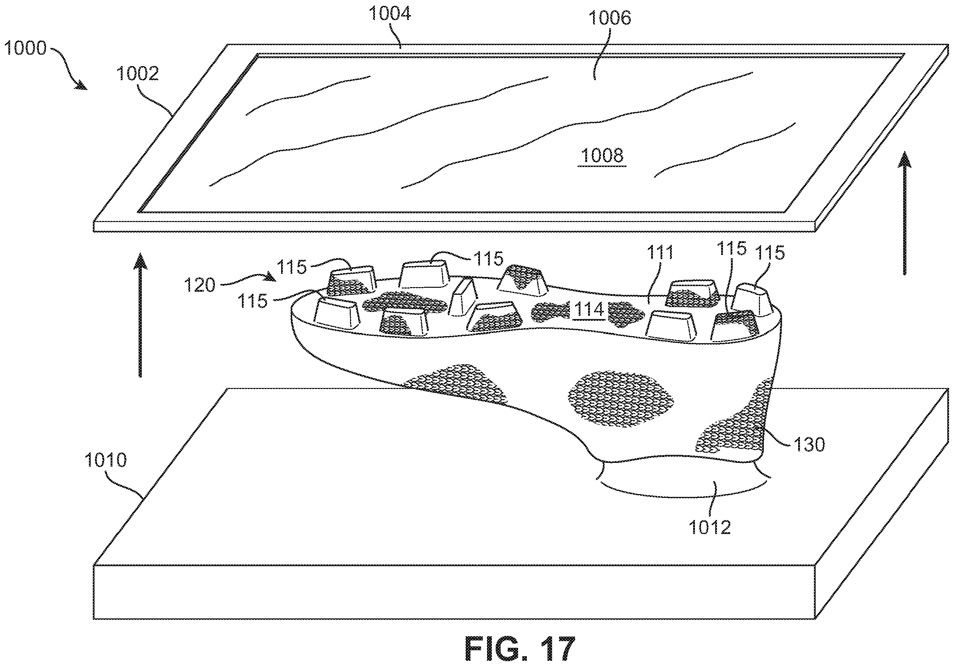

Referring now to FIG. 17, moveable portion 1002 is moved to the open position away from base portion 1010 after the application of the vacuum forming process. In this embodiment, knit outsole 112 including cleat members 115 is shown formed on outsole bottom surface 114 of knitted component lower portion 111 of upper 120 placed on last 1012. As described above, the location, size, and arrangement of cleat members 115 corresponds and aligns with the location, size, and arrangement of protuberances 310 on bottom side 304 of insert member 300 that has been placed on last 1012. With this arrangement, a one-piece foot-enclosing bootie may be formed with a knit outsole.

In addition, insert member 300 may be used not only for forming the knit outsole during the vacuum forming process, such as process 800 described above, but may also remain disposed with the interior of upper 120 and placed in relation with outsole top surface 113 such that protuberances 310 align with and fill cavities of cleat members 115. With this arrangement, insert member 300 may both form knit outsole 112 and provide cushioning to a foot of a wearer and/or reinforcement to cleat members 115.

In some embodiments, additional components or elements may be associated with a sole system, including sole system 110, to provide for enhanced traction and/or wear resistance to portions of the article of footwear. In an exemplary embodiment, sole system 110 may include provisions that at least partially cover portions of cleat members 115 on outsole bottom surface 114. In one embodiment, sole system 110 may include cap elements 1800 that at least partially cover portions of cleat members 115 on outsole bottom surface 114 of knit outsole 112. In this embodiment, cleat face 116 of cleat members 115 is formed from a knit surface of knitted component lower portion 111 and cap elements 1800 may be attached or joined to cleat face 116 to at least partially cover this knit surface.

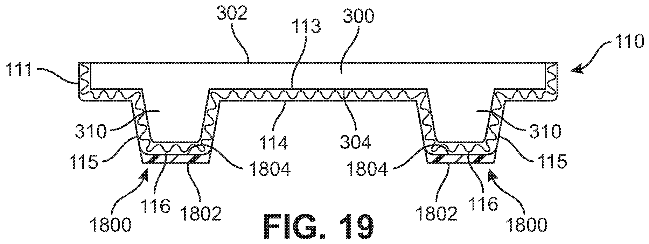

In an exemplary embodiment, cap elements 1800 may include a top side 1802 and an opposite bottom side 1804. As shown in FIG. 19, top side 1802 of cap element 1800 is configured to face away from outsole bottom surface 114 and may directly engage with a ground surface when an article is worn. Bottom side 1804 of cap element 1800 is configured to be attached or joined with cleat face 116 on cleat member 115. In various embodiments, cap elements 1800 may be joined with or attached to cleat face 116 using any suitable mechanism. For example, in some cases, cap elements 1800 may be bonded to cleat face 116 using a thermoplastic polymer material. In other cases, cap elements 1800 may be attached to cleat face 116 by directly forming cap elements 1800 onto the knit surface using a molding or printing process. In still other cases, cap elements 1800 may be adhesively joined to cleat face 116. Additionally, in some embodiments, portions of a knitted component forming a knit outsole, including knitted component lower portion 111, may include yarns that facilitate or assist with attaching cap elements 1800 to the knit outsole. For example, fusible yarns or yarns incorporating a thermoplastic polymer material may be used to facilitate or assist with attaching cap elements 1800 to the knit outsole.

In some embodiments, cap elements 1800 may be formed from any suitable material that may be used to form a traction element or an outsole. Examples of suitable materials include, but are not limited to: polymers, elastomers, siloxanes, natural rubber, other synthetic rubbers, aluminum, steel, natural leather, synthetic leather, plastics, or other materials suitable for providing traction or protection. With this configuration, cap elements 1800 may cover portions of cleat face 116 of cleat members 115 so as to provide wear protection to the knit surface of knitted component lower portion 111 forming knit outsole 112. In addition, cap elements 1800 may also be configured to provide enhanced traction or a gripping surface to cleat members 115 and/or portions of the knit outsole 112.

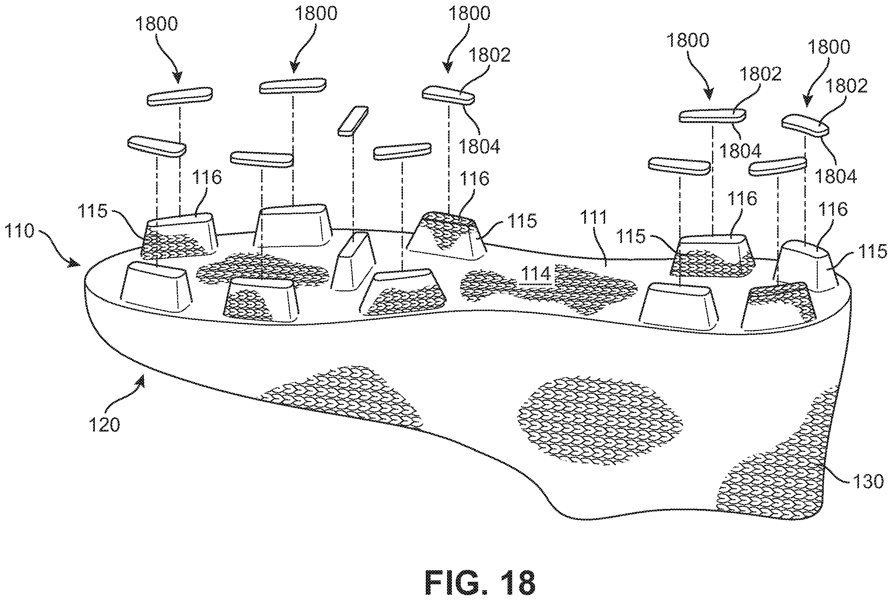

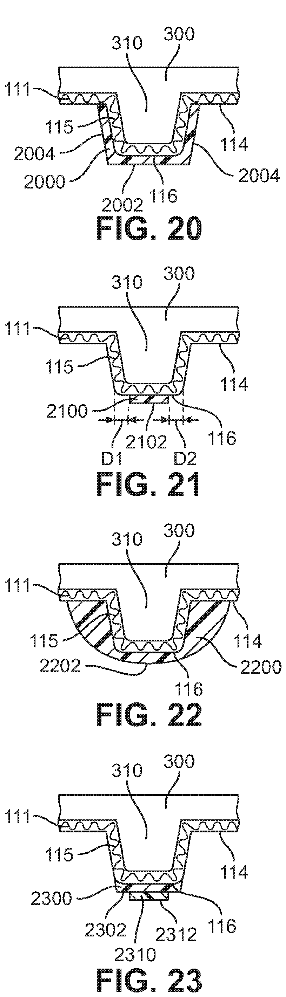

FIG. 18 and 19 illustrates an exemplary embodiment of cap element 1800 that has a shape that approximately corresponds with and is similar to the shape of cleat face 116. However, in other embodiments, a cap element may have different shapes and/or configurations. FIG. 20 through 23 various alternate embodiments of cap elements that may be used with knit outsole 112 to at least partially cover a portion of one or more cleat members 115.

Referring now to FIG. 20, an alternate embodiment of a cap element 2000 is illustrated. In an exemplary embodiment, cap element 2000 may entirely cover cleat face 116 of cleat member 115, as well as extending up along one or both sides of cleat member 115. In this embodiment, cap element 2000 includes a lower portion 2002 that covers cleat face 116 of cleat member 115 and two extending portions 2004 disposed on either side of lower portion 2002 that extend away from lower portion 2002 along the sides of cleat member 115 towards outsole bottom surface 114. In some cases, extending portions 2004 may extend at least partially along the sides of cleat member 115. In other cases, extending portions 2004 may extend the entirety of the sides of cleat member 115 to an area adjacent to or abutting with outsole bottom surface 114. With this configuration, an entirety of cleat member 115, or at least a substantial majority of cleat member 115, may be covered by cap element 2000. In some cases, cap element 2000 may be used in embodiments where additional protection or rigidity for cleat member 115 of knit outsole 112 is desired, in addition to enhanced traction that may be generally provided by a cap element.

Referring now to FIG. 21, another alternate embodiment of a cap element 2100 is illustrated. In an exemplary embodiment, cap element 2100 may extend less than the entirety of cleat face 116 of cleat member 115. In this embodiment, cap element 2100 includes a lower portion 2102 that covers less than the entirety of cleat face 116 of cleat member 115. In an exemplary embodiment, cap element 2100 may be located approximately a first distance D1 from one side of cleat member 115 and a second distance D2 from the opposite side of cleat member 115. In some cases, first distance D1 and second distance D2 may be approximately equal so as to center cap element 2100 and lower portion 2102 on cleat face 116 of cleat member 115. In other cases, first distance D1 and second distance D2 may be different so as to offset cap element 2100 towards one side or the other of cleat face 116. With this configuration, a portion less than the entirety of cleat face 116 of cleat member 115 may be covered by cap element 2100. In some cases, cap element 2100 may be used in embodiments where enhanced traction for specific portions of cleat member 115 of knit outsole 112 is desired.

Referring now to FIG. 22, another alternate embodiment of a cap element 2200 is illustrated. In an exemplary embodiment, cap element 2200 may entirely cover cleat face 116 of cleat member 115, as well as extending up along one or both sides of cleat member 115 and also covering a portion of outsole bottom surface 114. In this embodiment, cap element 2200 includes a lower portion 2202 that covers cleat face 116 of cleat member 115 and further extends on either side of cleat member 115 and towards outsole bottom surface 114, where cap element 2200 also covers at least a portion of outsole bottom surface 114. In some cases, cap element 2200 may be configured in the shape of a semispherical or hemi-spherical dome that covers over cleat member 115. In other cases, cap element 2200 may have a different shape that covers cleat member 115 and a portion of outsole bottom surface 114. With this configuration, an entirety of cleat member 115 and a portion of outsole bottom surface 114 may be covered by cap element 2200. In some cases, cap element 2200 may be used in embodiments where a change in the shape of cleat member 115 of knit outsole 112 is desired, or where the material forming cap element 2200 is used to reinforce sides of cleat member 115, in addition to enhanced traction that may be generally provided by a cap element.

Referring now to FIG. 23, another alternate embodiment of a cap element 2300 is illustrated. In an exemplary embodiment, cap element 2300 may have a tiered configuration that presents at least two different surfaces having different heights extending away from cleat face 116 of cleat member 115 in the vertical direction. In an exemplary embodiment, tiered cap element 2300 may combine features of previous embodiments of cap elements, described above. For example, in this embodiment, tiered cap element 2300 may generally include the features of cap element 1800 with the features of cap element 2100. As shown in FIG. 23, tiered cap element 2300 includes a lower portion 2302 that covers cleat face 116 of cleat member 115, and presents a first surface located at a first height from cleat face 116. In addition, tiered cap element 2300 further includes an upper portion 2310 that presents a second surface 2312 located at a second height from cleat face 116 that is greater than and located on top of the first surface of lower portion 2302. With this configuration, benefits of multiple configurations of cap elements may be combined with cap element 2300. In other embodiments, other features of the various embodiments of cap elements described above may be similarly combined together into other embodiments of a cap element for use with knit outsole 112 and sole system 110.

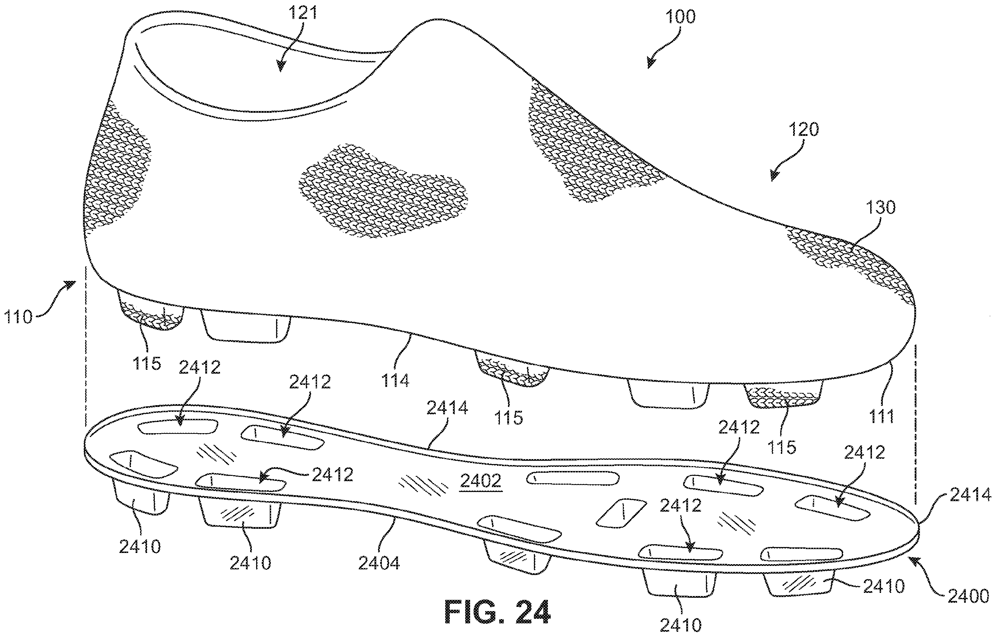

In some embodiments, rather than providing individual cap elements to cover each cleat member 115 of knit outsole 112, an outsole cover assembly may be provided to cover all of knit outsole 112, including cleat members 115 and outsole bottom surface 114. FIGS. 24 through 26 illustrate an exemplary embodiment of an outsole cover assembly 2400 that may be configured to cover all of knit outsole 112, including cleat members 115 and outsole bottom surface 114.

Referring now to FIG. 24, outsole cover assembly 2400 is shown in exploded relation with article 100. In an exemplary embodiment, outsole cover assembly 2400 has a top surface 2402 and an opposite bottom surface 2404. Top surface 2402 is configured to be brought in relation with outsole bottom surface 114. In some cases, top surface 2402 of outsole cover assembly 2400 may be joined with or attached to outsole bottom surface 114 of knit outsole 112 using any of the methods described above for attaching a cap element to cleat members 115 of knit outsole. Bottom surface 2404 of outsole cover assembly 2400 is configured to interact with a ground surface and may assist with providing durability, protection, and/or traction to sole system 110 of article 100.

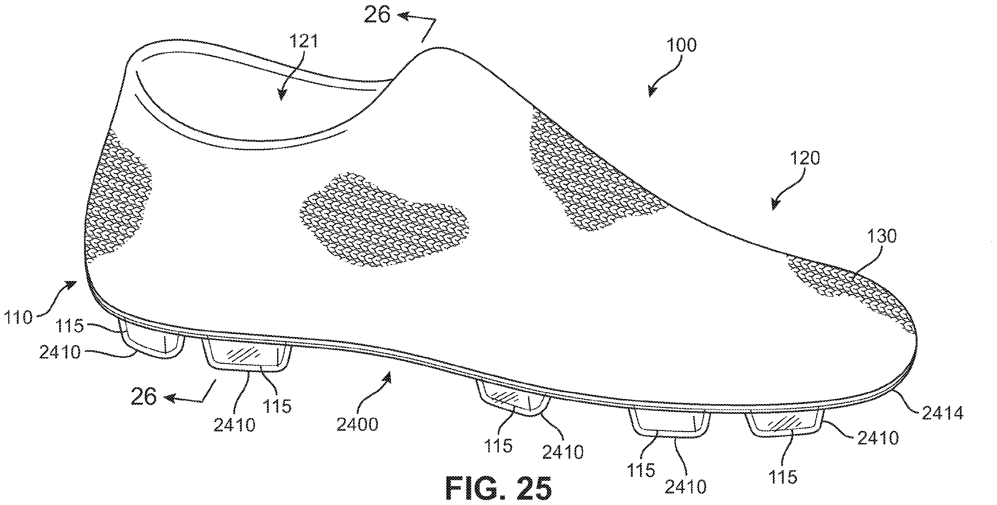

In some embodiments, outsole cover assembly 2400 may be formed with one or more recesses 2412 in top surface 2402 of outsole cover assembly 2400 that are configured to align with and correspond to cleat members 115 on outsole bottom surface 114 of knit outsole 112. In an exemplary embodiment, the location, size, and arrangement of recesses 2412 of outsole cover assembly 2400 may be selected to be substantially similar to the location, size, and arrangement of cleat members 115 on outsole bottom surface 114 of knit outsole 112. In one embodiment, recesses 2412 form cleat cover elements 2410 that extend outward from bottom surface 2404 of outsole cover assembly 2400. With this configuration, an entirety of cleat member 115 and outsole bottom surface 114 of knit outsole 112 may be covered by cleat cover elements 2410 and outsole cover assembly 2400. Accordingly, as shown in FIG. 25, when knit outsole 112 of article 100 is brought in relation to and joined with outsole cover assembly 2400, cleat members 115 are received into recesses 2412 of outsole cover assembly 2400.

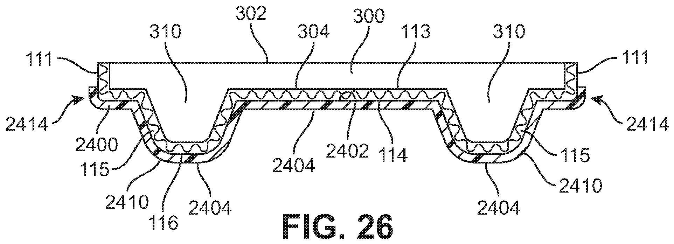

In some embodiments, outsole cover assembly 2400 may further include a lip 2414 that extends around an outer periphery along a peripheral edge of outsole cover assembly 2400. Lip 2414 may be configured to extend above top surface 2402 of outsole cover assembly 2400 along the outer periphery to form a wall or raised portion. Additionally, lip 2414 may define a shape of the outer periphery of outsole cover assembly 2400 that is substantially similar to and corresponds with the shape of knit outsole 112, including outsole bottom surface 114. In some embodiments, when article 100 is brought in relation with outsole cover assembly 2400, lip 2414 may at least partially extend upwards along medial or lateral sides of knitted component lower portion 111, as shown in FIG. 26. With this configuration, lip 2414 may assist with aligning article 100 within outsole cover assembly 2400 and also assist with providing support and/or rigidity to portions of sole system 110 and article 100.

In various embodiments, outsole cover assembly 2400 may be made from any suitable material, including any of the materials described above for making a cap element, as well as any other suitable materials for making an outsole. In addition, while in the present embodiments outsole cover assembly 2400 covers substantially all of knit outsole 112 and cleat members 115, in other embodiments, an outsole cover assembly may cover only portions of knit outsole 112 and/or selected cleat members 115 located in specific portions or regions of sole system 110. With this configuration, desired additional durability, wear resistance, rigidity, and/or traction may be provided by an outsole assembly in selected areas of sole system 110.

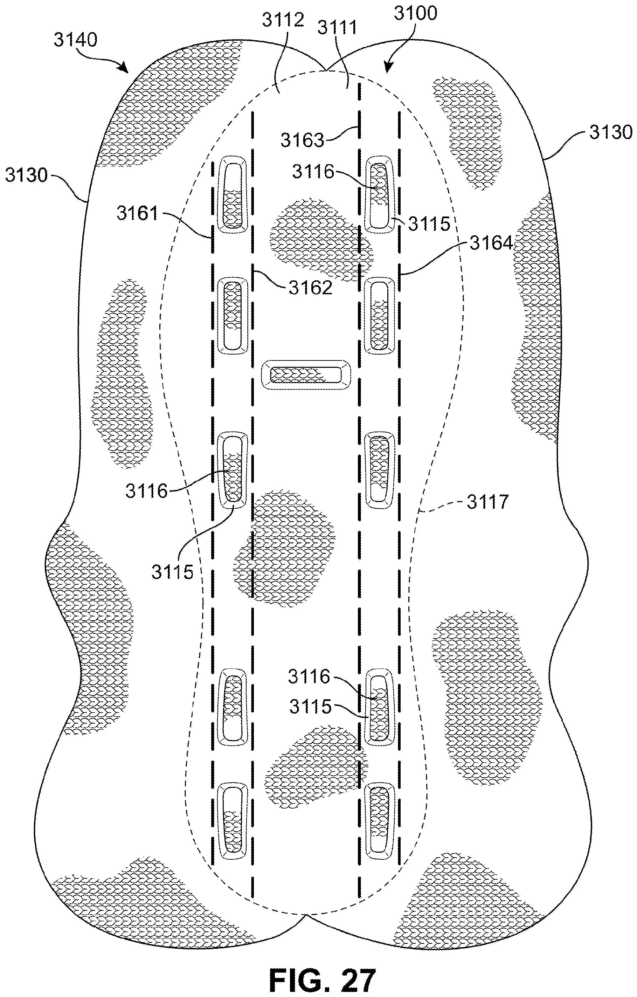

In some embodiments, sole system 3110 and knitted component 3130 may be formed of unitary knit construction such that they may be knitted as a one-piece element to form a foot-enclosing knit portion 3140. FIG. 27 illustrates such an embodiment. FIG. 27 illustrates an essentially planar or flat foot-enclosing knit portion 3140 comprising sole system 3110 and knitted component 3130. Knitted component 3130 is illustrated in two elements on opposite sides of sole system 3110. Sole system 3110 includes knitted component 3111 forming one-piece knit outsole 3112 having bottom surface 3114, and ground-engaging cleat member 3115 having bottom 3116. At least first tensile element 3161, and optionally second tensile element 3162, third tensile element 163, and fourth tensile element 3164 are inlaid within knitted component 3111. In some embodiments, one or more of tensile element 3161, tensile element 3162, tensile element 3163, or tensile element 3164 may be exposed on bottom surface 3114. Line of demarcation 3117 is illustrated for purposes of reference.

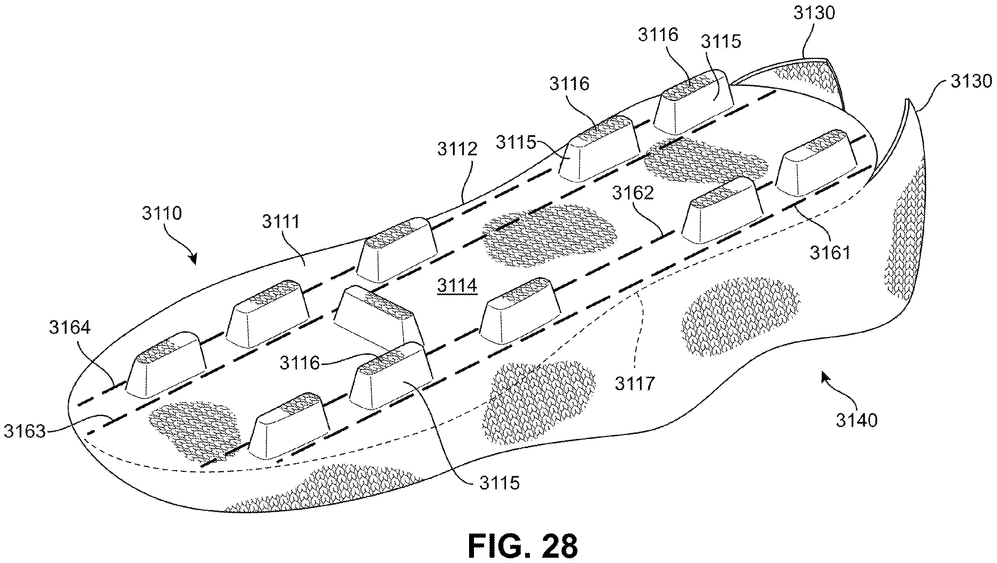

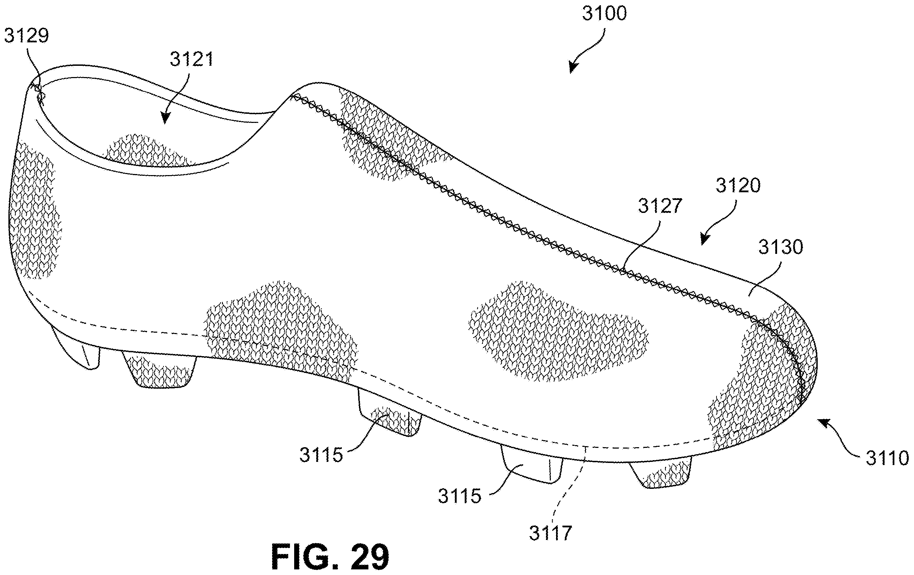

FIG. 27, FIG. 28, and FIG. 29 illustrate an exemplary process of forming article of footwear 3100 from foot-enclosing knit portion 3140, which is flat or planar in FIG. 27, and is configured into a completed article of footwear 3100 in FIG. 29. FIG. 28 illustrates an intermediate stage, wherein foot-enclosing knit portion 3140 has been folded or bent upward from about line of demarcation 3117, clearly distinguishing sole system 3110 from knitted component 3130. Knitted component 3111, one-piece knit outsole 3112 having bottom surface 3114, ground-engaging cleat member 115 having bottom 116, and first tensile element 3161, second tensile element 162, third tensile element 163, and fourth tensile element 3164, are clearly visible as part of sole system 3110. In FIG. 28, the forefoot area is completely formed, but the heel edges of knitted component 3130 have not been brought together.

In the embodiments illustrated in FIG. 27 through FIG. 28, the tensile elements are located adjacent ground-engaging cleat members 3115. Location of the tensile elements in this way may control stretching of the sole during use. For example, location of the tensile elements longitudinally may control lengthwise stretch of outsole 3112. Further, locating a tensile element adjacent a ground-engaging cleat member controls stretch at the periphery of the base of the ground-engaging cleat member. Such stretch may be introduced by wear or as part of the manufacturing process, particularly the process by which the protuberance for the cleat member is formed in the knitted component. Extending the tensile element along a side of a plurality of cleat members also helps control stretching between cleats.

FIG. 29 illustrates a complete article of footwear 3100 from foot-enclosing knit portion 3140. Article of footwear 3100 comprises knitted component 3130 and sole system 3110. Upper 3120 is formed by stitching or otherwise attaching the ends of knitted component 3130 at seam 3127 in the forefoot region and the midfoot region and at seam 3129 in the heel region to form a void for a wearer's foot.

In some embodiments, seam 3127 and seam 3129 resulting from the stitching or joining together of the sides of knitted component 3130 may be located essentially on the longitudinal midline of article of footwear 3100 if the size of knitted component 3130 is essentially the same on each side of article of footwear 3100, as illustrated in the drawing Figures herein. In other embodiments of the disclosure, the seam may be located anywhere on the surface of upper 3120. Such an adjustment can be made by making one side of knitted component 3130 wider than the other.

Line of demarcation 3117 illustrates a dividing line between sole system 3110 and other components of the article of footwear 3100. Ground-engaging cleat member 3115 protrudes away from the bottom side or surface 3114 of one-piece knit outsole 3112.

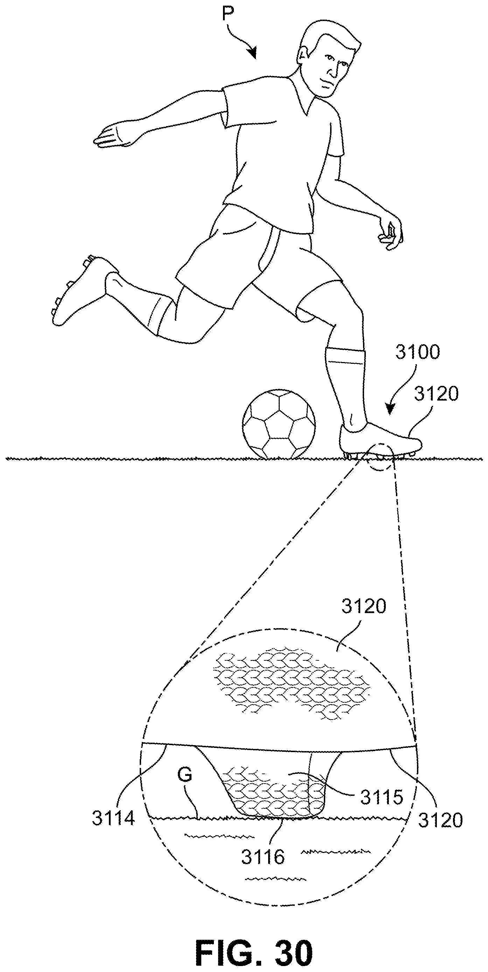

FIG. 30 illustrates an article of footwear in use by player P, with an exploded view of article of footwear 3100 in contact with ground G. In this exploded view, upper 3120 and ground-engaging cleat member 3115 protruding from the bottom surface 3114 of one-piece knit outsole 3112 are clearly seen. Ground-engaging cleat member 3115 makes contact with ground G at bottom surface 3116 of ground-engaging cleat member 3115. In this embodiment, bottom surface 3116 of ground-engaging cleat member 3115 is a knit surface directly in contact with the ground. Portions of bottom surface 3114 of one-piece knit outsole 3112 also may contact the ground directly, such as on uneven ground surfaces or when ground-engaging cleat member 3115 is embedded in the ground.

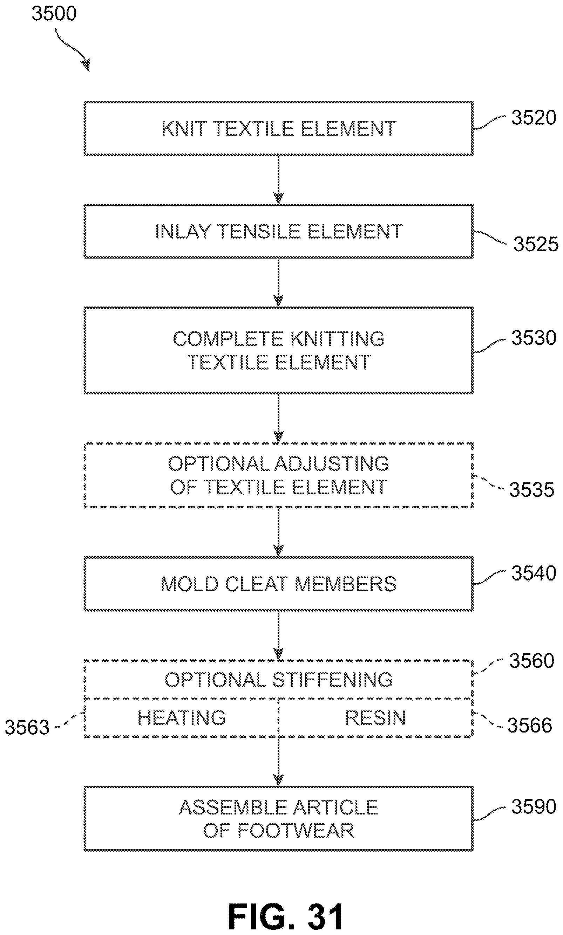

FIG. 31 is a block schematic diagram of a method 500 for manufacturing an article of footwear in accord with the disclosure. In accordance with the method of knitting a textile element (such as knitted component 3111 and/or knitted component 3130) is begun in step 520. As part of this knitting, a tensile element, such as tensile element 3161, is inlaid within the textile element in step 3525. Knitting continues (step 3530) until the textile element is complete. The tensile element may be adjusted in step 3535. Ground-engaging cleat members are formed in step 540. The textile may be steamed to set the yarn, in accordance with known processes. Then, areas of the textile element may be stiffened at method step 560. Typically, such stiffening would be useful in areas of the textile element subject to heavy abrasion. Fusible yarn may be used in this area, for example, on portions of knitted components corresponding to protuberances forming ground-engaging cleat members. Fusible yarn may be heated at step 563 to soften the outer surfaces of the yarn. Alternatively, a stiffening resin or plastic may be applied and activated and cured or heated at step 566. Typically, stiffening resins or plastics are located so as not to interfere with adjustments by the tensile element. Then, the final folding, matching, sticking and adhering to form the article of footwear is carried out as step 590 to form an article of footwear.

A sole system for an article of footwear is provided. The sole system includes a knitted component incorporating a one-piece knit outsole. The knit outsole has a ground-facing side and a top side. At least two protruding ground-engaging cleat members are formed on the ground-facing side of the knit outsole. A tensile element may be inlaid within the ground-facing side of the one-piece knit outsole.

An article of footwear including the sole system is provided. The article of footwear includes an upper and the sole system connected thereto. The upper may be one-piece or may have a strobel sock or other closure at the bottom of the upper. The top side of the outsole and the bottom of the upper are affixed.

A method of making a sole system for an article of footwear is provided. In accordance with the method, a ground-engaging member is formed in a one-piece knit outsole having a ground-facing side and a top side. At least two protruding ground-engaging cleat members are formed by molding the knitted component.

Various methods, machines, and tools can be used for forming, treating, and otherwise adjusting knitted component 3111 and for forming article of footwear 3100 incorporating one-piece knit outsole 3112. It will be appreciated that the order of steps within the method may vary from the order described herein. Certain steps or aspects of some steps may be skipped or eliminated as well. Moreover, two or more steps within the method may be carried out sequentially or simultaneously. Furthermore, the steps within the method may be carried out manually or automatically, using any suitable tool, machine, or implement.

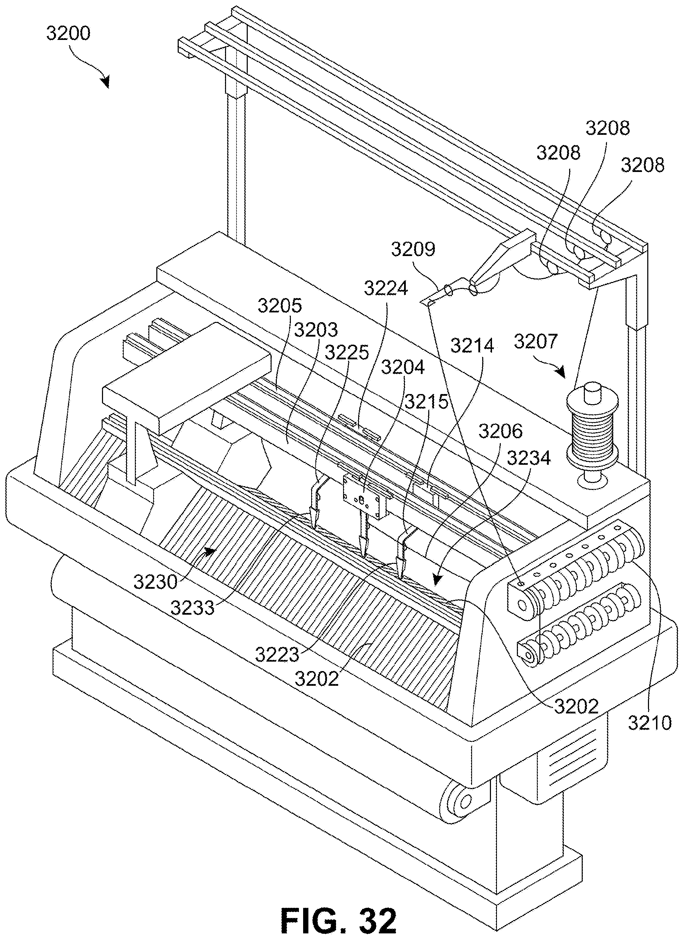

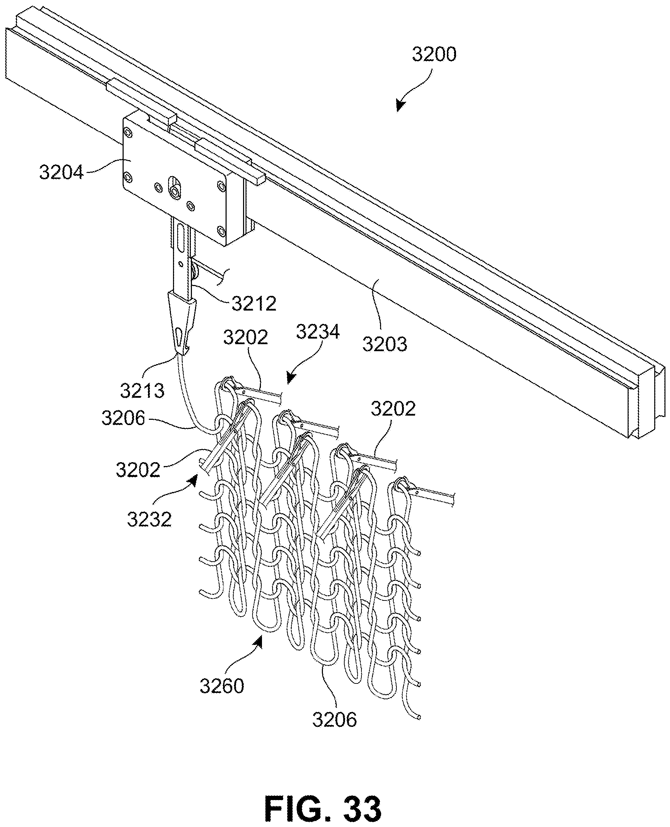

FIG. 32 and FIG. 33 illustrate an exemplary process of knitting a knitted component, including a knitted component substantially similar to knitted component 3111, knitted component 3130, and foot-enclosing knit portion 3140 described above. Although knitting may be performed by hand, the commercial manufacture of knitted components is generally performed by knitting machines. An example of a knitting machine 3200 that is suitable for producing any of the knitted components described herein is depicted in FIG. 32. Knitting machine 3200 has a configuration of a V-bed flat knitting machine for purposes of example, but any of the knitted components described herein may be produced on other knitting machines.

Knitting machine 3200 includes first needle bed 3232 and second needle bed 3234 having needles 3202 that are angled with respect to each other, thereby forming a V-bed. That is, needles 3202 from first needle bed 3232 lay on a first plane, and needles 3202 from the second needle bed 3234 lay on a second plane. The first plane and the second plane are angled relative to each other and meet to form an intersection that extends along a majority of a width of knitting machine 3200. As described in greater detail below, needles 3202 each have a first position where they are retracted and a second position where they are extended. In the first position, needles 3202 are spaced from the intersection where the first plane and the second plane meet. In the second position, however, needles 3202 pass through the intersection where the first plane and the second plane meet.

Rail 3203 and rail 3205 extend above and parallel to the intersection of needles 3202 and provide attachment points for standard feeder 3204. Rail 3203 and rail 3205 each have two sides, each of which may accommodate one standard feeder. Therefore, knitting machine 3200 may include a total of four feeders. Three such feeders are illustrated in FIG. 32. Standard feeder 3204 is on the front of rail 3203, feeder 3214 is on the front of rail 3205, and feeder 3224 is on the back of rail 3205. Although two rails are depicted, additional rails could be present. Such additional rails would accommodate additional feeders. Such feeders may be useful to manufacture embodiments including two or more types of yarn. These additional feeders are supplied with yarn and are operated in the same way as the feeders described in detail.

Feeder 3204 moves along rail 3203 and needle beds 3232 and 3234, thereby supplying yarn to needles 3202. Yarn 3206 is provided to feeder 3204 by a spool 3207. More particularly, yarn 3206 extends from spool 3207 to various yarn guides 3208, yarn take-back spring 3209, and yarn tensioner 3210 before entering feeder 3204. Although not depicted, additional spools 3207 may be utilized to provide yarns to other feeders.

Standard feeders are conventionally utilized for a V-bed flat knitting machine 3200. Each feeder has the ability to supply yarn that needles 3202 manipulate to knit, tuck, and float. In some embodiments, only one feeder may be needed. In other embodiments, such as when the ground-engaging cleat members are knitted into the one-piece outsole, more than one feeder may be utilized. For such embodiments, a knitting machine 3200 in FIG. 32 may include first standard feeder 3204, second standard feeder 3214, and third standard feeder 3224 that are substantially similar to each other. The combination feeder has these abilities, and also has the ability to inlay a yarn. First standard feeder 3204 may be secured to a front side of rail 3203, second standard feeder 3214 may be secured to a front side of rail 3205, and third standard feeder 3224 may be secured to a rear side of rail 3205. In other embodiments of the disclosure, additional feeders may be used and may be located on the front or rear side of rail 3203.

In this embodiment, first yarn 3206 from spool 3207 passes through first standard feeder 3204 and an end of yarn 3206 extends outwardly from first dispensing tip 3213 at the end of first feeder arm 3212. Although yarn 3206 is depicted, any other strand (e.g., a filament, thread, rope, webbing, cable, chain, or yarn) may pass through first standard feeder 3204. A second yarn (not shown) similarly passes through second standard feeder 3214 and extends outwardly from second dispensing tip 3233 on second feeder arm 3215. A third yarn (not shown) may pass in a similar manner through third standard feeder 3224 to third dispensing tip 3233 on third feeder arm 3227.

Needles 3202 are manipulated to form loops 3206, with a plurality of loops forming knitted component 3260. The knitting process discussed herein relates to the formation of a knitted component 3260, which may be any knitted component, including knitted components that are similar to knitted component 3111, knitted component 3130, and foot-enclosing knit portion 3140. For purposes of the discussion, only a relatively small section of knitted component 3260 is shown in the Figures in order to permit the knit structure to be illustrated. Moreover, the scale or proportions of the various elements of knitting machine 3200 and knitted component 3260 may be enhanced to better illustrate the knitting process.

First standard feeder 3204 includes first feeder arm 3212 with first dispensing tip 3213. First feeder arm 3212 is angled to position first dispensing tip 3213 in a location that is (a) centered between needles 3202 and (b) above an intersection of needle beds 3201. Note that needles 3202 lay on different planes, which planes are angled relative to each other. That is, needles 3202 lay on the different planes of first needle bed 3232 and second needle bed 3234. Needles 3202 each have a first position in which needles 3202 are retracted, and a second position, in which needles 3202 are extended. In the first position, needles 3202 are spaced from the intersection where the planes upon which needle beds 3201 meet. In the second position, however, needles 3202 are extended and pass through the intersection where the planes upon which needle beds 3201 meet. That is, needles 3202 cross each other when extended to the second position. It should be noted that first dispensing tip 3213, second dispensing tip 3223, and third dispensing tip 3233, are located above the intersection of the planes. In this position, first dispensing tip 3213, second dispensing tip 3223, and third dispensing tip 3233 supply yarn to needles 3202 for purposes of knitting, tucking, and floating.

Referring again to FIG. 33, first standard feeder 3204 moves along rail 3203 and a new course is formed in knitted component 3260 from yarn 3206. More particularly, needles 3202 pull sections of yarn 3206 through the loops of the prior course, thereby forming the new course. Accordingly, courses may be added to knitted component 3260 by moving standard feeder 3204 along needles 3202, thereby permitting needles 3202 to manipulate yarn 3206 and form additional loops from yarn 3206.

Knitted components described herein can be formed from at least one yarn that is manipulated (e.g., with a knitting machine) to form a plurality of intermeshed loops that define a knitted component having a variety of courses and wales. Thus, adjacent areas of a knitted component can share at least one common course or at least one common wale. That is, knitted components can have the structure of a knitted textile. It will be appreciated that the knitted components can be formed via weft knitting operations, including flat knitting operations and circular knitting operations, warp knitting operations, or other suitable methods.

The knitted components may incorporate various types and combinations of stitches and yarns. With regard to stitches, the yarn forming the knitted components may have one type of stitch in one area of a knitted component and another type of stitch in another area of the knitted component. Depending upon the types and combinations of stitches utilized, areas of knitted components may have a plain knit structure, a mesh knit structure, or a rib knit structure, for example. The different types of stitches may affect the physical properties of a knitted component, including aesthetics, stretch, thickness, air permeability, and abrasion-resistance. That is, the different types of stitches may impart different properties to different areas of the knitted component. With regard to yarns, the knitted component may have one type of yarn in one area of a knitted component 3130 and another yarn in a different area of the knitted component.

Although embodiments of the disclosure have been described in detail as providing an upper comprising a single layer, the disclosure also contemplates uppers having plural layers. The plural layers may be fused, double-knit, or otherwise associated with each other.

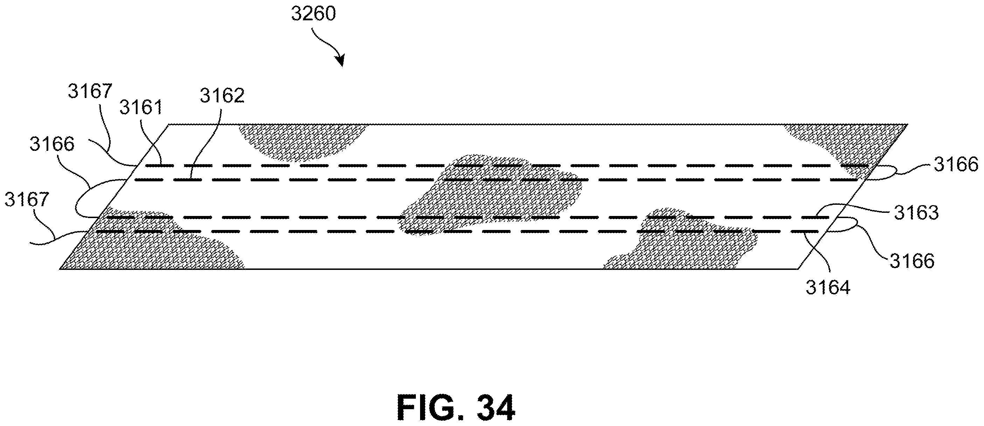

FIG. 34 illustrates a portion of a knitted component 3260, which may represent any of knitted component 3111, knitted component 3130, or foot-enclosing knit portion 3140. In particular, the portion is that portion in which ground-engaging cleat member 3115 are formed, so it includes portions that will become one-piece knit outsole 3112, and at least two ground-engaging cleat members 3115. The portion also includes first tensile element 3161, second tensile element 3162, third tensile element 3163, and tensile element 3164. The portion also includes tensile element loops 3166, which represent the travel of the tensile element at the end of the knitted component from one location to another, and tensile element leads 3167, which represent the travel of the tensile element at the beginning and end of the tensile element. Tensile element loops 3166 and tensile element leads 3167 may permit the inlaid tensile elements to be adjusted with the knitted component. In some embodiments, tensile element loops 3166 and tensile element leads 3167 may be removed from the edges of the textile element when the textile element is formed into a portion of an article of footwear. In some embodiments, tensile element loops 3166 and tensile element leads 3167 may be secured or attached to the bottom of the upper of the article of footwear.

Although the disclosure is described in detail as it relates to a knitted component for a sole system for an article of footwear, the principles described herein may be applied to any textile element to provide a knit surface on a protruding portion of an object to engage another object. For example, the principles may be applied to studs that protrude from the front or back of a glove or mitten to provide a secure grip on an object grasped with the glove or mitten. In such a case, the knitted component on the surface of the protruding object would not be ground-engaging, but rather would be object-engaging, and the tensile elements may be located analogously. The tensile element also may be located along or adjacent to the knuckles, across the palm, at the cuff, or any location amenable of adjustment, as described herein.

At least two ground-engaging members are formed on the knitted component in the sole system. The ground-engaging members protrude from the ground-facing surface of the outsole. At least the bottom surface of the ground-engaging member engages the ground, and the sides of the ground-engaging member also may engage the ground.

In some embodiments, a ground-engaging member may be formed by stretching the knitted component in the area of the outsole where the ground-engaging member is to be located to form a protuberance. Typically, protuberances are found in the forefoot and in the heel, although protuberances may be placed anywhere on the outsole surface. Plural ground-engaging members may be formed by stretching the knitted component individually, essentially simultaneously, in groups, or simultaneously to form the protuberances.

In some embodiments, a mold may be formed by any suitable method. The mold may have a single protuberance, or may have a protuberance for each ground-engaging member to be formed by the stretching operation. In other embodiments, two molds may be necessary. One mold may be used to form protuberances extending from the forefoot area, and the second mold may be used to form protuberances extending from the heel area.

In some embodiments, all protuberances are formed essentially simultaneously. A mold may have a male part and a mated female part into which the male part is pressed. The knitted component is placed in an open mold, typically on the female part of the open mold. The knitted component is located so that the portion of the knitted component that forms the bottom of the sole is appropriately registered with the portions of the female mold that form the protuberances. The mold ensures that the knitted component is retained at the edges so that the protuberances are formed by stretching, rather than by forcing extra textile into the cavity and wrinkling the remainder of the knitted component. Then, the male part of the mold is pressed into the knitted component and into the female part of the mold to form the protuberances in the sole. The mold parts then are separated, and the knitted component with protuberances is advanced for further processing.

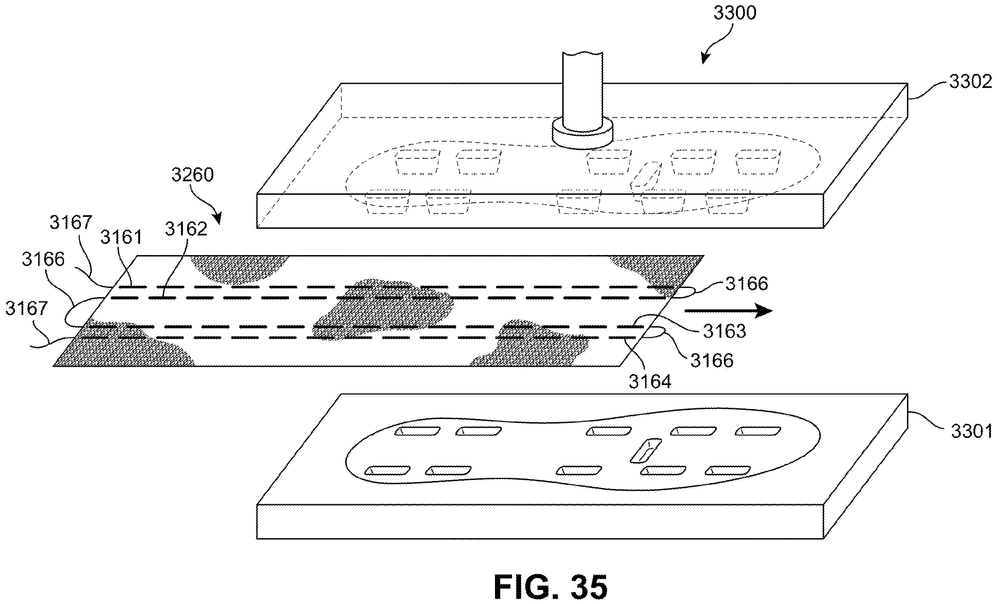

FIG. 35 through FIG. 38 illustrate the method steps by which ground-engaging cleat members may be formed. Mold 3300 is open, and knitted component 3260 is placed between mold male part 3302 and mold female part 3301, as shown by the direction of the arrow. The mold is closed and the mold secures the edges of knitted component 3260 to ensure that knitted component 3260 is stretched to form ground-engaging cleat members 3115 when the mold is closed.

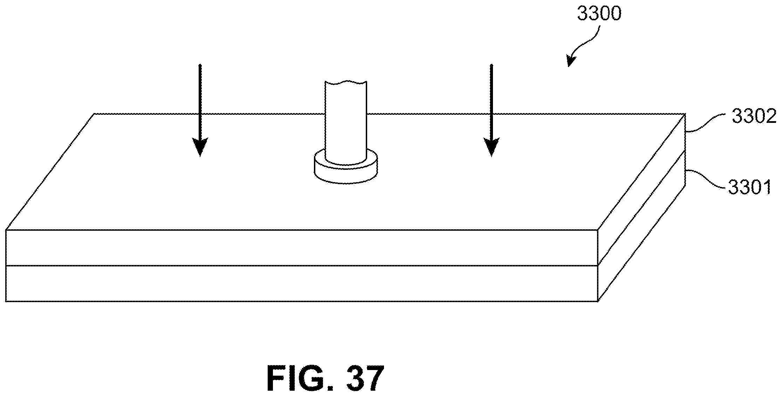

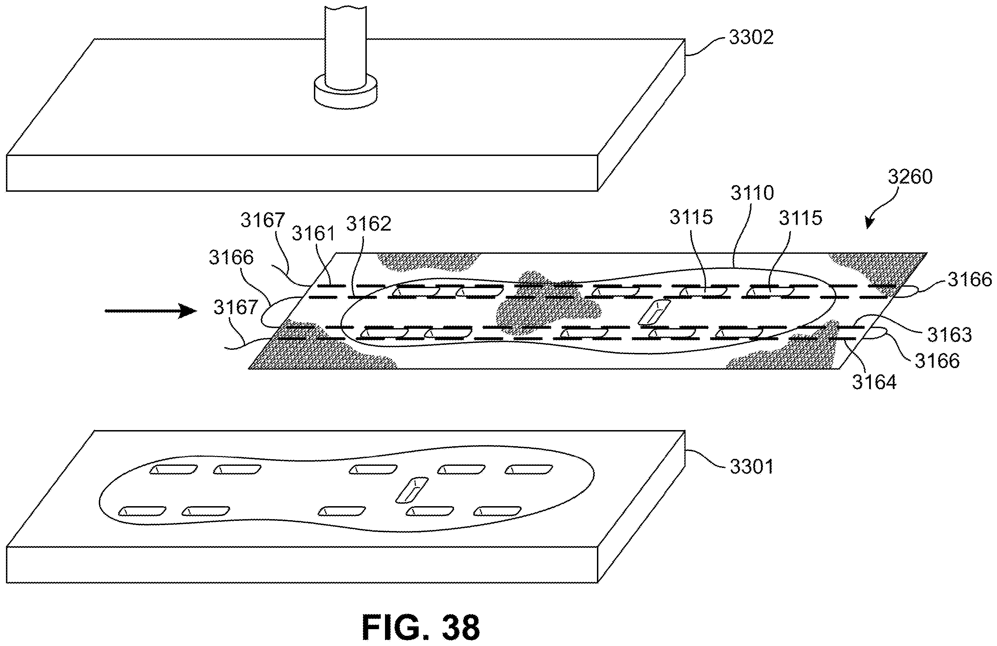

FIG. 37 illustrates that male mold part 3302 and female mold part 3301 are moved together to press knitted component 3260 therebetween. FIG. 38 illustrates that the mold parts have been separated, and one-piece outsole 3112 has formed. In particular, the top surface of the outsole 3113 and ground-engaging cleat member 3115 are visible as the knitted textile is removed in the direction of the arrow from the separated mold.

In other embodiments, all protuberances may be formed essentially simultaneously by injection molding. Injection molding uses a fluid under pressure to form protuberances in a surface, here the knitted component. Injection molding may be used to inject materials such as elastomers and thermoplastic and thermosetting polymers. The knitted component is held in place and the knitted component is stretched to form the protuberances. Typically, thermoplastic polymers are used because such materials are well-suited for injection molding. Thermoset materials may react too quickly or not quickly enough while being injected. Further, thermoplastic polymers may be reused and recycled, thus making such material an environmentally sensitive choice.

A knitted component is correctly oriented on the female mold part. Then, the mold is closed. The other part of the mold contains runners and other tubes for delivering the injected material through nozzles to the mold cavity. Heated material is forced into the mold cavity to stretch the knitted component and form the protuberances. The material cools and hardens to the configuration of the protuberances. The molds then are separated and the molded knitted component is removed.

In some embodiments, the injected material may remain in the protuberances to provide rigidity. In some such embodiments, an additional feature such as a shank may be formed between the forefoot portion and the heel portion. The shank may provide additional rigidity to the outsole and thus to an article of footwear made with the sole system. In other embodiments, the injected material may be removed from the protuberances. In some such embodiments, the protuberances may be filled with another rigid material, or may be filled with soft material to provide a perception of cushioning.

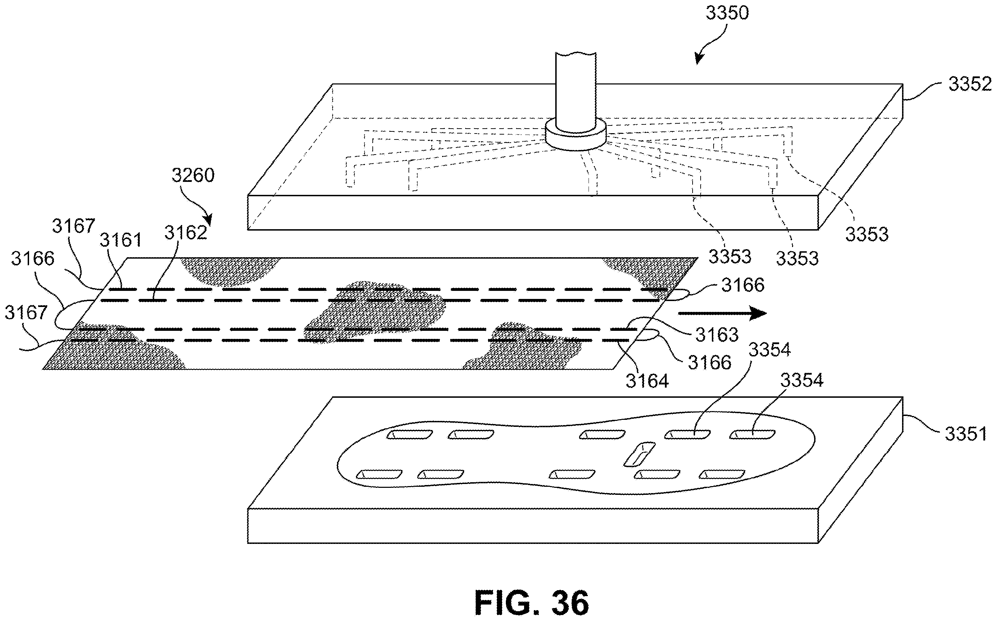

FIG. 36 discloses another embodiment for forming ground-engaging cleat member 3115. Mold 3350 includes female part 3351 and injectors 3352 including nozzles 3353. Each nozzle 3353 corresponds with a cavity 3354 shaped to form a ground-engaging cleat member 3115. Knitted component 3260, including first tensile element 3161, second tensile element 3162, third tensile element 3163, fourth tensile element 3164, tensile element loops 3166, and tensile element leads 3167, is placed between the injection nozzles, as shown by the arrow. Then, the mold parts are brought together and a material is injected from nozzles 3353 into cavities 3354 to form ground-engaging cleat members 3115.

The material injected may be left in a ground-engaging cleat member 3115 to provide additional support. Also, the individual pieces of injected material may be connected by a sprue or another manner. A mass of injected material also may be used to form a structure that will attenuate forces from the ground-engaging cleat member 3115 reinforcement into the wearer's foot. A skilled practitioner will be able, with the guidance provided herein, to select suitable materials for this purpose.

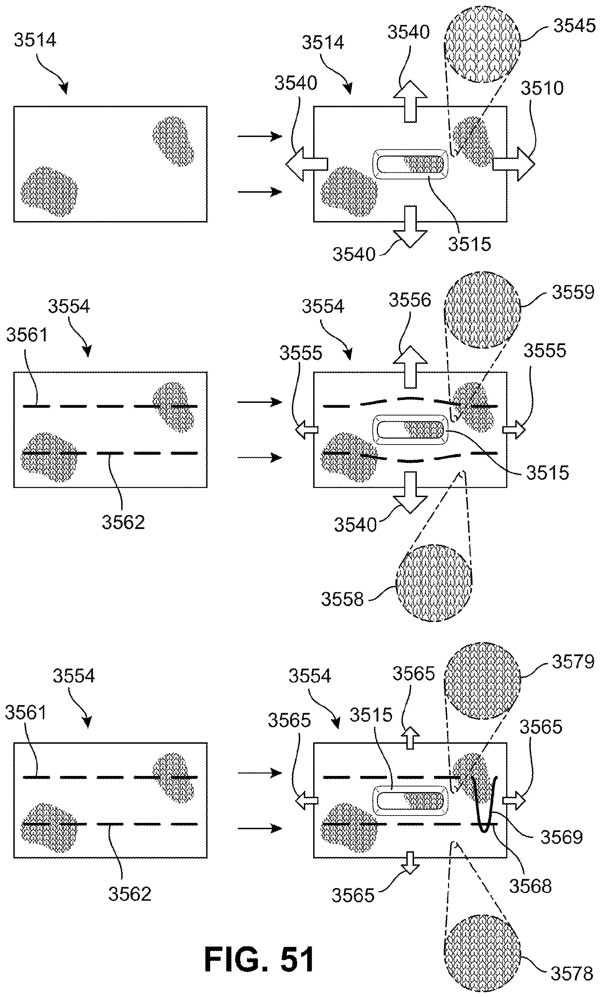

Moving ahead to FIG. 51, FIG. 51 illustrates a representation of a tensile element inlaid within the sole of a knitted component used to reduce differences in stress in an outsole. The top panel illustrates how formation of cleat 3115 in outsole portion 3514 introduces stress into the knitted structure. Unstressed outsole portion 3514 on the left then is moved into a press, as indicated by the movement arrows. When cleat 3515 is formed by pressing, the area surrounding the cleat is subjected to essentially equal stress in all directions, thus causing approximately equal stretching of the knitted component in the area of the cleat. This approximately equivalent stretch is illustrated by expanded view 3545 and arrows 3540, which, by their relative size, illustrate approximately equal stress in all directions.

The center panel on FIG. 51 illustrates knitted component 3554 having tensile element 3561 and tensile element 3562 inlaid therein. Cleat 3555 is formed by pressing down, displacing tensile element 3561 and tensile element 3562 and introducing stress, as indicated by different arrows 3556 and 3555. The magnitude of this stress introduced into knitted component 3554 is greater in the lateral direction (arrows 3556) than in the longitudinal direction (arrows 3555). Knitted component 3554 is stretched close to cleat 3515, as illustrated in magnified view 3559. The amount of stress in this location can be compared to the lack of stress in magnified view 3558.

The bottom panel of FIG. 51 illustrates how the tensile elements may be used to restore a knitted component to typical stress or tension levels. Knitted component 3554 having tensile element 3561 and tensile element 3562 inlaid therein is pressed (movement arrows) to form cleat 3515. To reduce the stress introduced by the pressing, loop 3569 in tensile element 3561 is pulled to reduce the lateral stress. Loop 3569 is pulled along the surface of knitted component 3554 and then secured under tensile element 3162, such as at 3568, to retain the tension. Re-establishment of more typical stress distribution is illustrated by equal-sized force arrows 3565 and by enlarged view of the knitted surface at 3578 and 3579. Enlarged view 3578 illustrates a typical knit pattern away from cleat 3515, as was found in enlarged view 3558. Further, enlarged view 3579 illustrates stress on knitted component 3514 in the vicinity of cleat 3515. The stress pattern at enlarged view essentially matches that at magnification 3578 away from cleat 3515. This is because tensile element 3162 has been adjusted to relieve this stress.

The tensile elements may be manipulated to adjust the tension in a portion of a knitted component. The wearer may adjust the tension to provide a secure fit by adjusting longitudinal (along the length of an article of footwear) tension, lateral (across the width of the article of footwear) tension, or both. Such adjustments also may be made to compensate for any slackness that develops during wear and use of the article of footwear. The tensile elements also may be used to adjust tension in the shoe outsole in the area of cleat members or other protuberances.

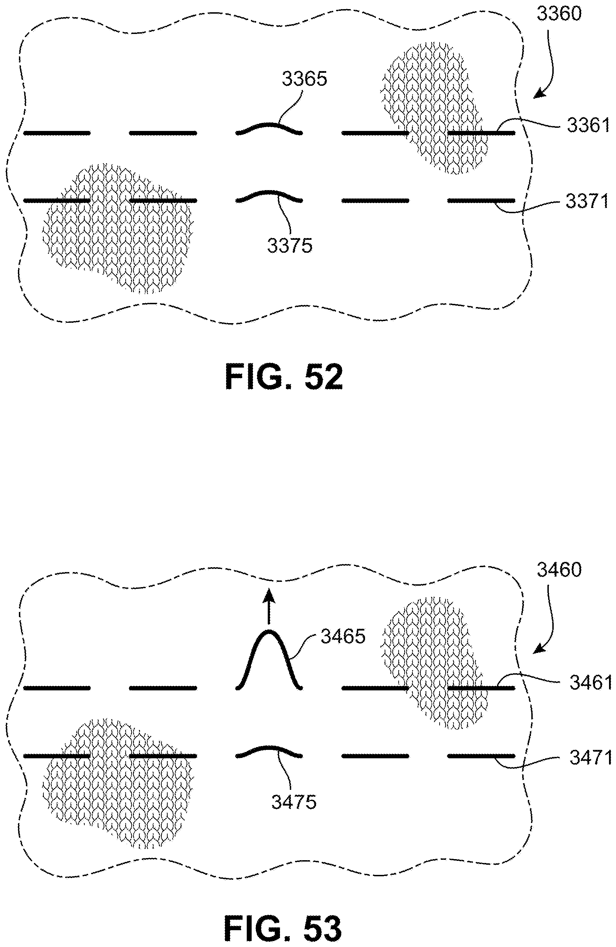

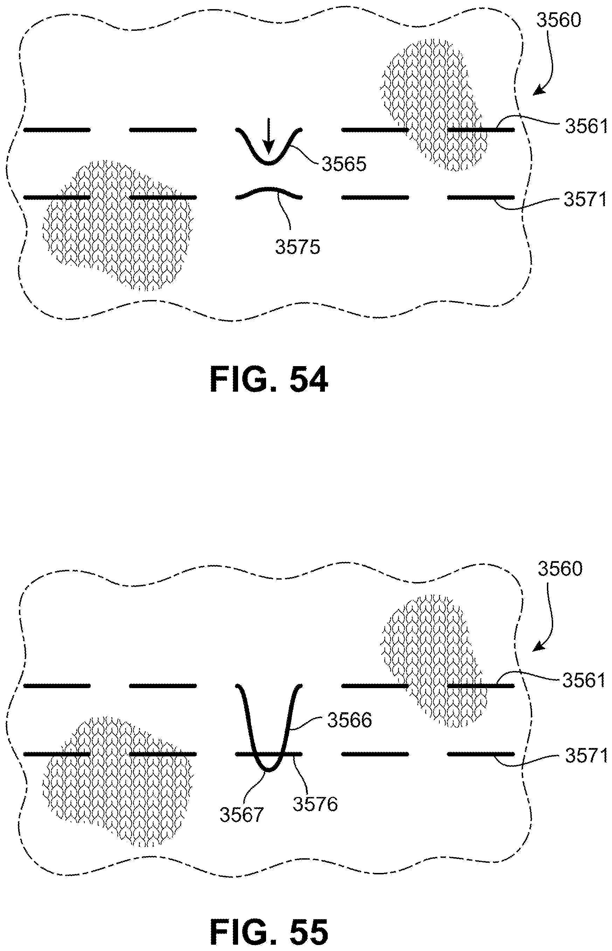

FIG. 52 through FIG. 55 illustrate exemplary embodiments of adjusting tensile elements to increase longitudinal (FIG. 52 and FIG. 53) tension or both longitudinal and lateral (FIG. 54 and FIG. 55) tension. These are merely several exemplary embodiments of how the tensile elements can be used in an article of footwear.

FIG. 52 illustrates equal adjustment of adjacent tensile elements. Knitted component 3360 includes tensile element 3361 and tensile element 3362. Portions of the tensile elements are shown. FIG. 53 illustrates equal tension being introduced into adjacent tensile element 3361 and tensile element 3371 by pulling on them equally, thus forming loop 3365 in tensile element 3361 and loop 3375 in tensile element 3371. Increasing the size of the loop increases the tension in the tensile element, and thus in the affected region of knitted component 3360.

In some embodiments, the loops can be made by pulling the tensile element with the fingers or a suitable tool. The loop may be pulled away from the ground-engaging surface, may be pulled parallel to the surface of the sole, or may be pulled at any angle.

FIG. 53 illustrates an exemplary process of introducing additional tension into a single tensile element. As can be seen, loop 3465 is larger than loop 3475. Therefore, more tension is introduced into tensile element 3461 by loop 3465 than is introduced into tensile element 3471 by loop 3475, as loop 3475 is much larger than loop 3465. In various embodiments, the loops may extend in any direction.

FIG. 54 and FIG. 55 illustrate two steps of a process to introduce tension both longitudinally and laterally. As shown in FIG. 54, a small loop 3575 is introduced into tensile element 3571. A larger loop 3565 is introduced in tensile element 3561. Loop 3565 in tensile element 3561 is pulled in the direction of the other tensile element, tensile element 3571, and is pulled across the surface of the outsole.

In a second step illustrated in FIG. 55, loop 3566 is pulled sufficiently to entrap the top 3567 of loop 3566 under tensile element 3571 at loop 3576. Loop 3576 then is eliminated to hold the top 3567 of loop 3566. This arrangement introduces both longitudinal and lateral tension into this area of outsole 3114.

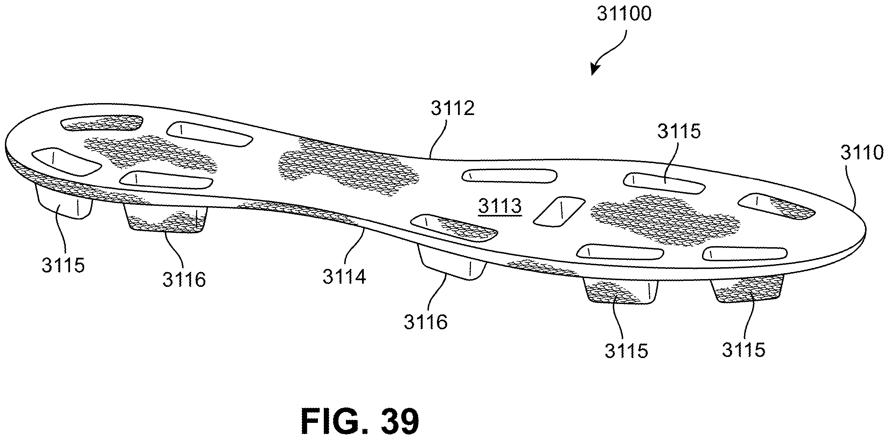

Moving back to FIG. 39, FIG. 39 through FIG. 41 illustrate assembly of an article of footwear 31000. Article of footwear 3100 comprises both an upper and a sole system in a unitary knit construction, whereas article of footwear 31000 comprises an upper separate from the sole system. FIG. 39 illustrates sole system 31100, including knitted component 3111 forming a one-piece knit outsole 3112 having top surface 3113 and ground-engaging cleat members 3115. The bottom surface or side 3114 of the outsole and the ground-engaging portion 3116 of selected ground-engaging cleat members 3115 also are indicated.

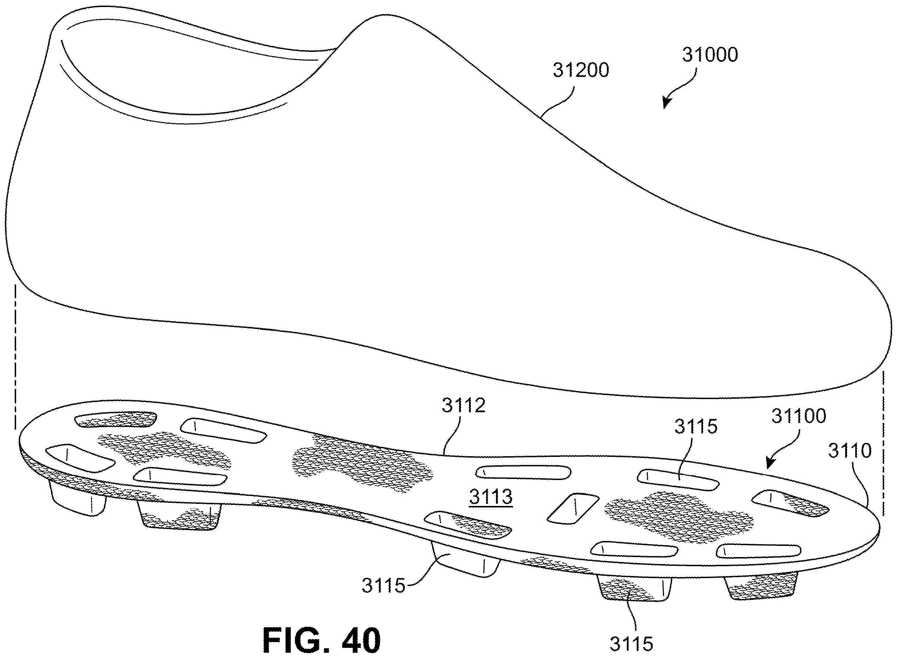

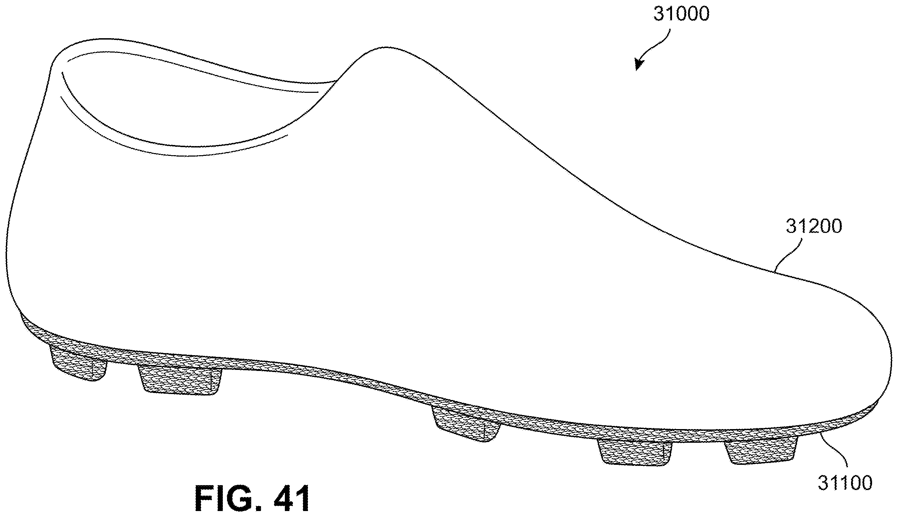

FIG. 40 illustrates assembly of article of footwear 31000 using sole system 31100. Upper 31200 is brought into contact with sole system 31100 and affixed to the top surface 3113 thereof. Upper 31200 may be made from any material, such as leather, plastic, woven materials, and the like. FIG. 41 illustrates an assembled article of footwear 31000. This article of footwear 31000 includes a one-piece knit outsole 3112.

Still other embodiments provide a method of making a sole system for an article of footwear. In accordance with the method, a one-piece knitted component is knitted to include a knit outsole. At least two ground-engaging cleat members are formed in the ground-facing side of the knit outsole by knitting. A surface of the ground-engaging cleat member may include a knitted surface that contacts the ground.

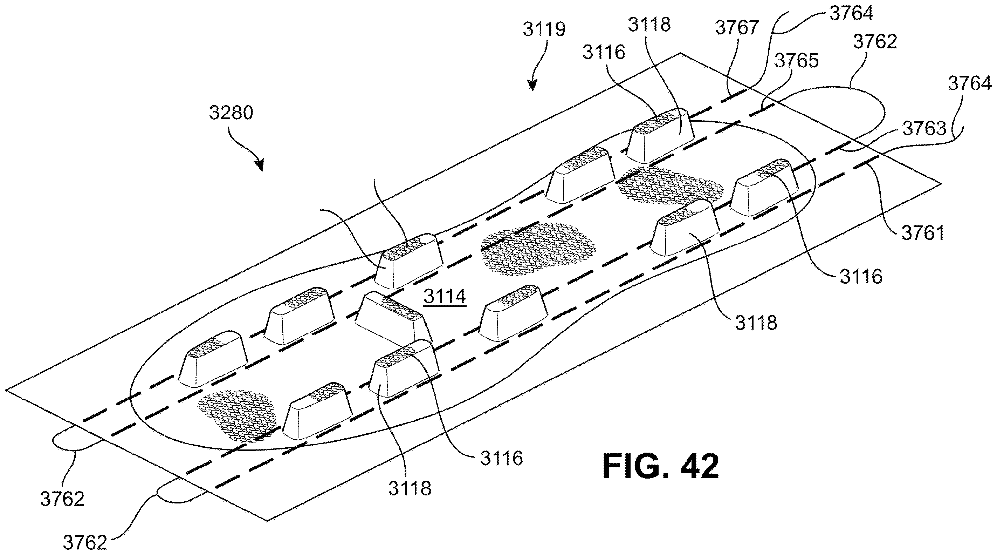

FIG. 42 illustrates knitted component 3280, another embodiment of a knitted component. In this embodiment, ground-engaging cleat members 3118 are knit into the one-piece knit outsole. Therefore, there is less stress in the textile in the vicinity of the ground-engaging cleat members, and in the ground-engaging cleat members. In this embodiment, ground-engaging cleat members 3118 are knitted into one-piece knit outsole 3112 as pockets or cavities extending from bottom surface 3114 of the outsole. Each of ground-engaging cleat members 3118 may be knitted from the same yarn as the remainder of the knit outsole 3112; other embodiments may form pockets using a different yarn.

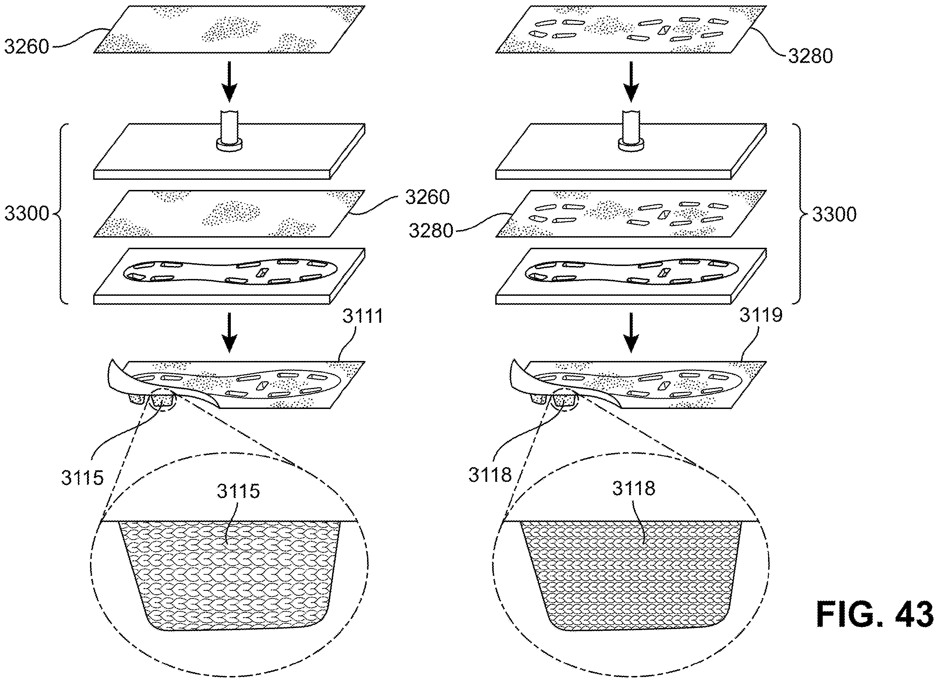

FIG. 43 illustrates the difference in stress in the ground-engaging cleat members between stretching or molding to form ground-engaging cleat member 3115 and knitting to form ground-engaging cleat member 3118. Knitted component 3260 and knitted component 3280 are molded in molds 3300 to form knitted component 3111. Knitted component 3260 is molded to stretch the textile of knitted component 3260 to form ground-engaging cleat members 3115 in knitted component 3111. However, when knitted component 3280 is molded to form knitted component 3119, there is essentially no stretching of the knit ground-engaging cleat member 3118 or of the remainder of the knit structure forming knitted component 3119. The exploded views of stretched ground-engaging cleat member 3115 and of unstretched ground-engaging cleat member 3118 clearly illustrate this difference.

In some embodiments, the ground-engaging cleat members 3115 may be reinforced from the inside. In some embodiments, a cap-type protector may be used to cover the bottom and at least a portion of the sides of the ground-engaging cleat members. In some embodiments, the ground-engaging cleat member is filled with a reinforcing material. In some embodiments, the filling may be done by using injection molding to stretch-form ground-engaging cleat members 3115. In other embodiments, a midsole insert form to fill the ground-engaging cleat members is used.

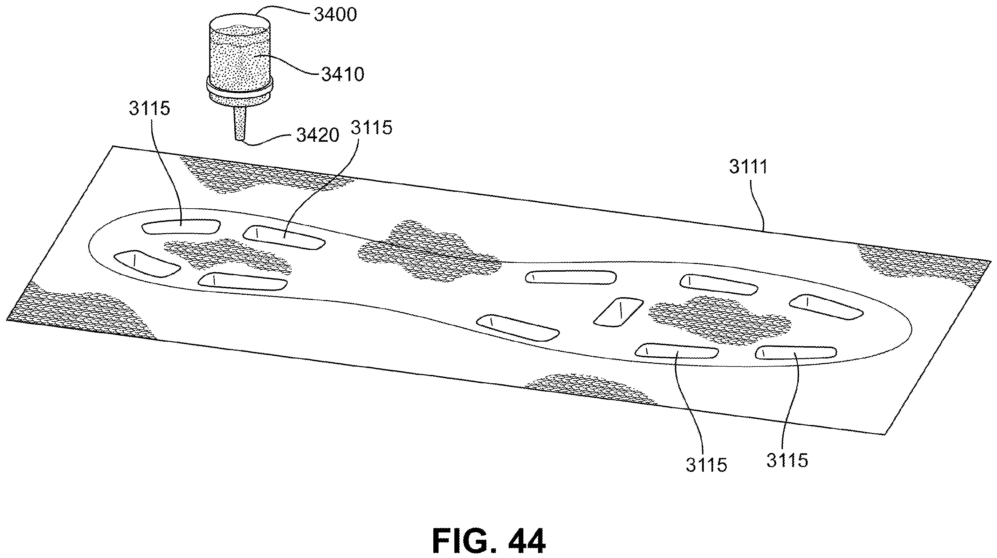

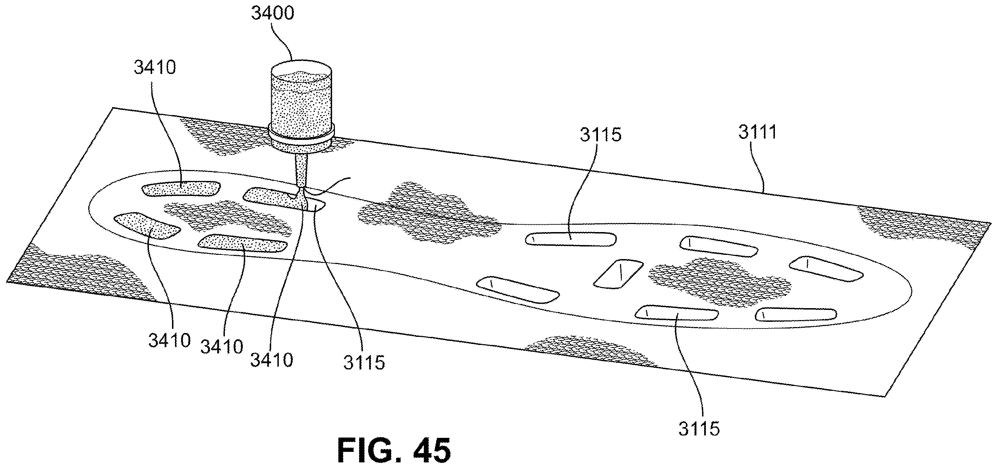

FIG. 44 through FIG. 47 illustrate a method for reinforcing ground-engaging cleat members by filling them with reinforcing material. FIG. 44 illustrates knitted component 3111 with stretch-formed ground-engaging cleat members 3115, but knitted ground-engaging cleat members 3118 also may be reinforced by filling them. Container 3400 is in position to dispense filler 3410 through filler nozzle 3420, as illustrated in FIG. 45.

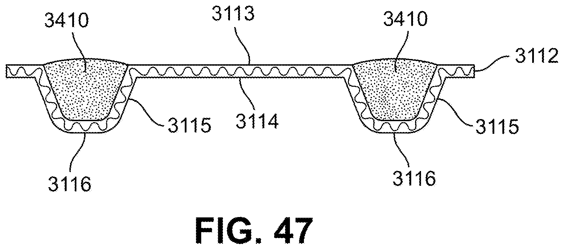

FIG. 45 further illustrates that some ground-engaging cleat members 3115 have not yet been filled with reinforcing material 3410. Some ground-engaging cleat members 3115 may be left empty to provide a selected cushioning response. However, as illustrated in FIG. 47, each ground-engaging cleat member 3115 may be filled with filler or reinforcement material 3410.

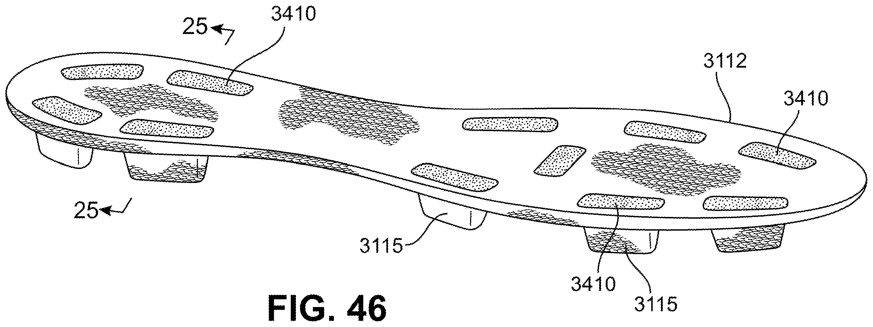

FIG. 47 is a cross sectional view take at line 25 of FIG. 46. One-piece knit outsole 3112, including outsole top side 3113, outsole bottom side 3114, bottom surfaces 3116 of ground-engaging cleat members 3115, and ground-engaging cleat member 3115 filled with reinforcement material 3410 are illustrated in FIG. 47. As illustrated, reinforcement material 3410 may extend above outsole top surface 3113. The individual masses filling the ground-engaging cleat members 3115 also may be connected, as described above. Bottom surface 3116 of ground-engaging cleat member 3115 is a knit surface that may be directly in contact with the ground. Other surfaces of one-piece knit outsole 3112, such as outsole bottom side 3114, also may be in direct ground contact.

Filler material 3410 may be any suitable reinforcing material. Reinforcing materials may include compositions that provide minimal support. Such compositions may be used to tune a cushioning response. More typically, however, a reinforcing material 3410 may be selected for its rigidity and strength. The material may be foamed material, such as foamed plastic materials. For example, foamed thermoplastic polyurethane may be suitable. The density of foamed materials may be controlled to tune cushioning response. Higher density may give a more supportive response and better reinforcement of ground-engaging cleat members.

In some embodiments, thermoplastic material may be used because such materials may be tough and strong, and can be foamed to tune cushioning response. Thermoset materials also may be used, but may present additional complications in manufacture because the thermoset reaction should not be completed before the material is in place. Further, as set forth above, thermoplastic materials may be more easily recycled, and thus present less waste.

Reinforcing materials may be liquid or may be in powder or particulate form, particularly in a form that can be compressed into the ground-engaging cleat members to provide reinforcement. Therefore, a retaining seal may be used to retain these reinforcing materials in the ground-engaging cleat members.

In other embodiments, a properly-designed midsole insert may be used to both reinforce the ground-engaging cleat members and to provide support for the foot. Reinforcement of the ground-engaging cleat members in this way is subject to the same considerations regarding selection of reinforcing material as are set forth above, but also may be formed to provide additional comfort or support for the wearer. An additional benefit also may be obtained by designing the insert to improve the strength of the shoe by, for example, providing arch support.

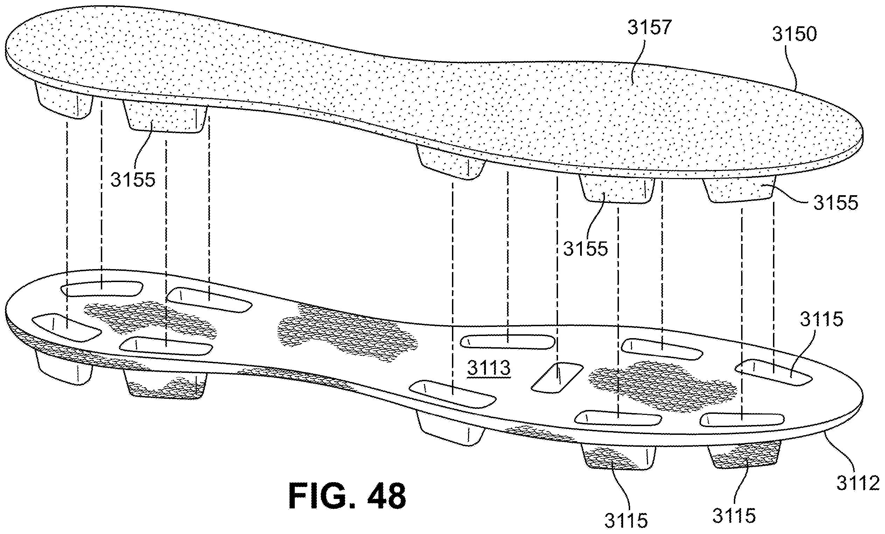

Thus, in some embodiments, the midsole may be monolithic or may have zones that provide additional support or resistance to twisting, for example. Midsoles are illustrated in FIG. 48 through FIG. 50. Reinforcement zones may be more rigid than the midsole surface 3157 that is in contact with the foot. Reinforcement zones may be found in the ground-engaging cleat members and in other areas of midsole 3150. For example, midsole 3150 may have a strengthened zone in the midfoot region for arch protection and comfort.

In some embodiments, some regions of midsole 3150 may comprise foamed thermoplastic material while other regions may be formed of the same or different materials. In some embodiments, midsole 3150 may comprise a zone of low-density foam, a zone of high-density foam, and a zone of unfoamed material.

Midsole 3150 having reinforcing members 3155 protruding from the bottom thereof is shown in relationship to one-piece knit outsole 3112 in FIG. 48. Reinforcement members 3155 are aligned with corresponding ground-engaging cleat members 3115.

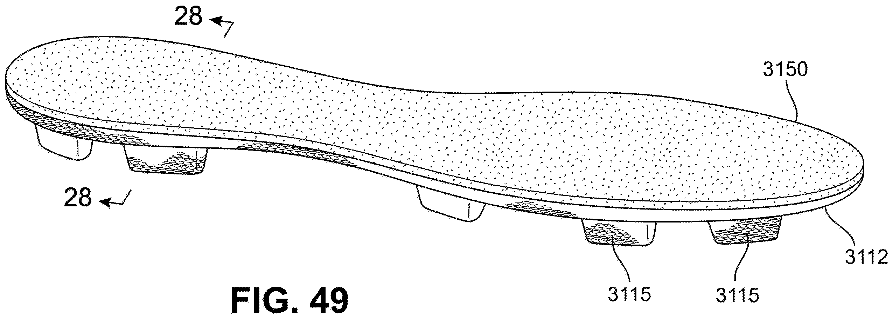

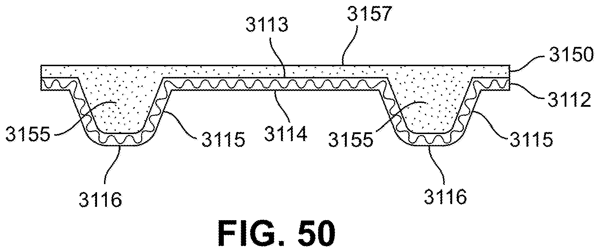

FIG. 49 illustrates midsole 3150 affixed to the top surface 3113 of one-piece knitted component outsole 3112. A cross-sectional view at line 28, shown in FIG. 50, illustrates midsole 3150 in place on the top surface 3113 of one-piece knit outsole 3112. Reinforcement members 3155 are in place in ground-engaging cleat members 3115. Foot-contacting surface 3157 of midsole 3150 is the upper surface of the assembly, and the bottom surface 3116 of the ground-engaging cleat members 3115 are facing downward. Bottom surface 3116 of ground-engaging cleat member 3115 is a knit surface that may be directly in contact with the ground. Other surfaces of one-piece knit outsole 3112, such as outsole bottom side 3114, also may be in direct ground contact.

Embodiments including a foot-enclosing sole system may comprise areas in which different yarns are used. Different types of yarns may impart different properties to different areas of the knitted component. By combining various types and combinations of stitches and yarns, each area of knitted component may have specific properties that enhance the comfort, durability, and performance of the article of footwear.

In such embodiments, tensile elements also extends into portions of the knitted component forming the upper and may be inlaid within the knitted component portions forming the upper. Although the tensile elements illustrated in these figures run longitudinally, it may be possible to inlay a tensile element laterally within the knitted component. In such embodiments, the tensile element may be routed through the insole to pass from one side of the outsole to another. This arrangement would allow a single tensile element to be inlaid from one side (lateral or medial, for example) of the upper through the outsole. The tensile element is inlaid around the cleat members and extends, whether by inlay or onlay, to the upper. Such an arrangement would aid in alignment of parts and secure attachment of parts for form an article of footwear.

Suitable materials also may be added anywhere on the outer surface where water resistance or another property or characteristic, such as rigidity, is sought. Such materials, typically in the form of a film, may be applied to the surface of the knitted component before the sole system is formed. Application of a film to a knitted component also may be accomplished after formation of components of the sole system.

For example, resistance of an article of footwear to incursion of water, particularly through the sole system, may be increased by affixing a thin film or water-resistant material on the outside surface of the outsole. The entirety of the outer sole surface may be covered with thin film, or only a portion or portions of the lower surface may be covered with film for wear resistance and water repellence.

Suitable thin film materials include polymers such as polyethylene and polypropylene, which may retain flexibility when bonded to the outer surface of a knitted component. Such films may suitably be used on surfaces of a knitted component that preferably retain their flexibility, such as an upper of an article of footwear. The skilled practitioner will be able to identify appropriate films.

In other embodiments, a thin film may be rigid or resistant to bending before or upon application, typically with heat and pressing. Application with heat and pressing causes the film to adhere or being adhered to the knitted component. Such rigid film may be formed of plural thin layers or one or two thicker layers. Plural materials may be stacked to form a more rigid film. A thicker, single layer also may be used.

Embodiments of a foot-enclosing sole system may include areas of softer yarns, compliant yarns, durable yarns, and fusible yarns, for example. Softer and compliant yarns typically may be used where comfort is an important feature, with durable yarns used in areas susceptible to wear. In particular, embodiments may have fusible yarns on the outsole, the protruding ground-engaging projection, and on the ground-engaging surface. Fusible yarns may be particularly durable and may serve the same purposes ascribed to them above. Similarly, a thin film may be used to the same advantage as set forth above.

Another suitable yarn may be a core and sheath-type bi-component construction. Core and sheath construction is obtained having a sheath of material having one set of properties essentially concentric with and surrounding a core of yarn material having another set of properties and characteristics. In embodiments, the sheath material is one type of yarn having a first set of properties and characteristics. Other bi-component yarns, such as "islands in the sea" type, also may be suitable. Such yarns typically may have fusible material on the outside, just as a core and sheath fiber has fusible material as a sheath material. Still another technique may be to spray a solvent-based fusible composition onto yarn. In such embodiments, the solvent may be water, thus making the composition environmentally sensitive.

In still further embodiments, a plurality of yarns may be used to provide transition zones for areas of the knitted component. For example, whereas durable, rigid yarns may be preferred for surfaces of the knitted component that are ground-facing, such yarns may not be preferred for an upper of an article of footwear. Rather, softer, more compliant yarns may be preferred on the upper, but such yarns may wear out prematurely in areas of high abrasion or stress, such as in the area of the heel, for example. For such high abrasion areas, if may be preferable to have a durable yarn.

In some embodiments, a rigid layer may be applied to both the top side of the outsole and the ground-facing side of the outsole. Such embodiments provide a rigid outsole, yet retain the look, properties, and characteristics of a knitted textile formed from a knitted component. Further, the rigid layer of material attached to the top side of the outsole may be useful in forming a protruding ground-engaging member.

Other embodiments may include a rubberized portion on the ground-facing surface of the outsole. A rubberized portion may be formed on the surface of the outsole by painting on a rubberized material, by adhering a rubberized material to the portion of the knitted component that forms the ground-facing surface of the outsole, or in any suitable method.

In embodiments having a layer of material on the ground-facing surface of the outsole, the shape of the layer may be formed to reduce adhesion of mud and dirt to the bottom of the sole, and thus to the bottom of an article of footwear incorporating the sole system. Various geometric shapes may be formed in the covering layer, or added to the ground-facing surface of the outsole, to minimize adhesion of mud and dirt.

The disclosure provides a sole system for an article of footwear. The sole system includes a knitted component incorporating a one-piece knit outsole. The knit outsole has a ground-facing side and a top side. At least two protruding ground-engaging cleat members are formed on the ground-facing side of the knit outsole.

A method of making a sole system for an article of footwear is provided. In accordance with the method, a one-piece knitted component is knitted to include a knit outsole. At least two ground-engaging cleat members are formed in the ground-facing side of the knit outsole by knitting.

## Claims

1. An article of footwear (100) having an upper (120) and a sole system (110), the article of footwear comprising:
a knitted component with a lower portion (111) included in the sole system, wherein the lower portion of the knitted component has a first surface (114) configured to face the ground and a second surface (113) facing opposite the first surface,
the knitted component including a plurality of cleat members (115) protruding from the first surface,
wherein the knitted component is continuous between each of the plurality of cleat members,
wherein the knitted component forms at least a portion of the upper,
wherein the lower portion (111) of the knitted component comprises an inlaid tensile element (3161), wherein the tensile element (3161) is positioned adjacent to at least one cleat member (115) of the plurality of cleat members (115) along a longitudinal or lateral direction of the sole system (110).

2. The article of footwear (100) according to claim 1, wherein the cleat members (115) are configured to contact the ground.

3. The article of footwear (100) according to claim 1, wherein the knitted component forms a knit outsole (112), the knit outsole comprising the cleat members (115).

4. The article of footwear (100) according to claim 1, further comprising an insert member (300) disposed in an interior of the upper (120), the insert member having protuberances (310) extending into cavities formed by the cleat members (115).

5. The article of footwear (100) according to claim 1, wherein the sole system (110) comprises a cleat cover element (2410) covering at least a portion of the cleat members (115) of the knitted component.

6. A sole system (110) for an article of footwear (100), the sole system comprising:
a knitted component, wherein the knitted component has a ground-facing surface (114) configured to face the ground and a top surface (113) facing opposite the ground-facing surface,
wherein the knitted component comprises a plurality of cleat members (115) protruding from the ground-facing surface,
wherein the knitted component is continuous between each of the plurality of cleat members, and
the sole system being **characterized by** a lower portion (111) of the knitted component comprising an inlaid tensile element (3161), wherein the tensile element (3161) is positioned adjacent to at least one cleat member (115) of the plurality of cleat members (115) along a longitudinal or lateral direction of the sole system (110).

7. The sole system (110) of claim 6, wherein the ground-facing surface (114) is configured to contact the ground.

8. The sole system (110) of claim 6, wherein the top surface (113) is configured to be affixed to an upper (120) formed separately from the sole system.

9. The sole system (110) of claim 6, wherein each cleat member (115) of the plurality of cleat members comprises a cavity filled with a reinforcing material (3410).

10. A method of manufacturing a sole system (110) for an article of footwear (100), the method comprising:
knitting a knitted component with a lower portion (111) included in the sole system, wherein the lower portion of the knitted component comprises a ground-facing surface (114) configured to face the ground and a top surface (113) facing opposite the ground-facing surface;
forming the knitted component to have a plurality of cleat members (115) protruding from the ground-facing surface,
the knitted component being continuous between each of the plurality of cleat members,
the method being **characterized by** the lower portion (111) of the knitted component comprising at least one inlaid tensile element (3161), wherein the tensile element (3161) is positioned adjacent to at least one cleat member (115) of the plurality of cleat members (115) along a longitudinal or lateral direction of the sole system (110).

11. The method of claim 10, further comprising inserting an insert member (300) within an upper (120) of the article of footwear (100) such that a protrusion extending from the insert member is received by cavities of the cleat members (115).

12. The method of claim 11, further comprising vacuum forming the lower portion (111) of the knitted component around an insert member (300) having a protuberance (310) to form the cleat members (115).

13. The method of claim 10, further comprising injecting a reinforcing material (3410) into cavities of the cleat members (115).

## Patentansprüche

1. Fußbekleidungsartikel (100) mit einem Oberteil (120) und einem Sohlensystem (110), wobei der Fußbekleidungsartikel Folgendes umfasst:
eine Strickkomponente mit einem unteren Abschnitt (111), der in dem Sohlensystem enthalten ist, wobei der untere Abschnitt der Strickkomponente eine erste Oberfläche (114), die so ausgebildet ist, dass sie dem Boden zugewandt ist, und eine zweite Oberfläche (113) aufweist, die zur ersten Oberfläche entgegengesetzt gewandt ist,
wobei die Strickkomponente mehrere Stollenelemente (115) aufweist, die von der ersten Oberfläche hervorstehen,
wobei die Strickkomponente zwischen jedem der mehreren Stollenelemente durchgehend ist,
wobei die Strickkomponente wenigstens einen Abschnitt des Oberteils bildet,
wobei der untere Abschnitt (111) der Strickkomponente ein eingelegtes Zugelement (3161) umfasst, wobei das Zugelement (3161) angrenzend an wenigstens ein Stollenelement (115) der mehreren Stollenelemente (115) längs einer Längs- oder Querrichtung des Sohlensystems (110) positioniert ist.

2. Fußbekleidungsartikel (100) nach Anspruch 1, bei dem die Stollenelemente (115) so ausgebildet sind, dass sie den Boden berühren.

3. Fußbekleidungsartikel (100) nach Anspruch 1, bei dem die Strickkomponente eine gestrickte Außensohle (112) bildet, wobei die gestrickte Außensohle die Stollenelemente (115) umfasst.

4. Fußbekleidungsartikel (100) nach Anspruch 1, ferner mit einem Einlegeelement (300), das in einem Inneren des Oberteils (120) angeordnet ist, wobei das Einlegeelement Vorsprünge (310) aufweist, die sich in von den Stollenelementen (115) gebildete Hohlräume erstrecken.

5. Fußbekleidungsartikel (100) nach Anspruch 1, bei dem das Sohlensystem (110) ein Stollenabdeckelement (2410) umfasst, das wenigstens einen Teil der Stollenelemente (115) der Strickkomponente abdeckt.

6. Sohlensystem (110) für einen Fußbekleidungsartikel (100), wobei das Sohlensystem Folgendes umfasst:
eine Strickkomponente, wobei die Strickkomponente eine dem Boden zugewandte Oberfläche (114), die so ausgebildet ist, dass sie dem Boden zugewandt ist, und eine Oberseite (113) aufweist, die zu der dem Boden zugewandten Oberfläche entgegengesetzt gewandt ist,
wobei die Strickkomponente mehrere Stollenelemente (115) umfasst, die von der dem Boden zugewandten Oberfläche hervorstehen,
wobei die Strickkomponente zwischen jedem der mehreren Stollenelemente durchgehend ist und
wobei das Sohlensystem **dadurch gekennzeichnet ist, dass** ein unterer Abschnitt (111) der Strickkomponente ein eingelegtes Zugelement (3161) umfasst, wobei das Zugelement (3161) angrenzend an wenigstens ein Stollenelement (115) der mehreren Stollenelemente (115) längs einer Längs- oder Querrichtung des Sohlensystems (110) positioniert ist.

7. Sohlensystem (110) nach Anspruch 6, bei dem die dem Boden zugewandte Oberfläche (114) so ausgebildet ist, dass sie den Boden berührt.

8. Sohlensystem (110) nach Anspruch 6, bei dem die Oberseite (113) zur Befestigung an einem Oberteil (120) ausgebildet ist, das getrennt vom Sohlensystem gebildet ist.

9. Sohlensystem (110) nach Anspruch 6, bei dem jedes Stollenelement (115) der mehreren Stollenelemente einen mit einem Verstärkungsmaterial (3410) gefüllten Hohlraum umfasst.

10. Verfahren zur Herstellung eines Sohlensystems (110) für einen Fußbekleidungsartikel (100), wobei das Verfahren Folgendes umfasst:
Stricken einer Strickkomponente mit einem unteren Abschnitt (111), der in dem Sohlensystem enthalten ist, wobei der untere Abschnitt der Strickkomponente eine dem Boden zugewandte Oberfläche (114), die so ausgebildet ist, dass sie dem Boden zugewandt ist, und eine Oberseite (113) umfasst, die zu der dem Boden zugewandten Oberfläche entgegengesetzt gewandt ist,
Bilden der Strickkomponente derart, dass sie mehrere Stollenelemente (115) aufweist, die von der dem Boden zugewandten Oberfläche hervorstehen,
wobei die Strickkomponente zwischen jedem der mehreren Stollenelemente durchgehend ist,
wobei das Verfahren **dadurch gekennzeichnet ist, dass** der untere Abschnitt (111) der Strickkomponente wenigstens ein eingelegtes Zugelement (3161) umfasst, wobei das Zugelement (3161) angrenzend an wenigstens ein Stollenelement (115) der mehreren Stollenelemente (115) längs einer Längs- oder Querrichtung des Sohlensystems (110) positioniert ist.

11. Verfahren nach Anspruch 10, das ferner ein Einlegen eines Einlegeelements (300) in ein Oberteil (120) des Fußbekleidungsartikels (100) umfasst, derart, dass ein vorstehender Teil, der sich von dem Einlegeelement erstreckt, von Hohlräumen der Stollenelemente (115) aufgenommen wird.

12. Verfahren nach Anspruch 11, das ferner ein Vakuumformen des unteren Abschnitts (111) der Strickkomponente um ein Einlegeelement (300) herum umfasst, das einen Vorsprung (310) zur Bildung der Stollenelemente (115) aufweist.

13. Verfahren nach Anspruch 10, das ferner ein Einspritzen eines Verstärkungsmaterials (3410) in Hohlräume der Stollenelemente (115) umfasst.

## Revendications

1. Article chaussant (100) présentant une tige (120) et un système de semelle (110), l'article chaussant comprenant :
un composant tricoté présentant une partie inférieure (111) comprise dans le système de semelle, la partie inférieure du composant tricoté présentant une première surface (114) réalisée de manière à faire face au sol, et une deuxième surface (113) tournée à l'opposé de la première surface,
le composant tricoté comprenant une pluralité d'éléments à crampon (115) qui font saillie de la première surface,
le composant tricoté étant continu entre chacun parmi la pluralité d'éléments à crampon,
le composant tricoté formant au moins une partie de la tige,
la partie inférieure (111) du composant tricoté comprend un élément de traction inséré (3161), l'élément de traction (3161) étant positionné adjacent à au moins un élément à crampon (115) parmi la pluralité d'éléments à crampon (115) selon un sens longitudinal ou latéral du système de semelle (110).

2. Article chaussant (100) selon la revendication 1, les éléments à crampon (115) étant réalisés de manière à être en contact avec le sol.

3. Article chaussant (100) selon la revendication 1, le composant tricoté formant une semelle extérieure tricotée (112), la semelle extérieure tricotée comprenant les éléments à crampon (115).

4. Article chaussant (100) selon la revendication 1, comprenant en outre un élément d'insertion (300) agencé dans un intérieur de la tige (120), l'élément d'insertion présentant des saillies (310) qui s'étendent dans des cavités formées par les éléments à crampon (115).

5. Article chaussant (100) selon la revendication 1, le système de semelle (110) comprenant un élément de recouvrement de crampon (2410) recouvrant au moins une partie des éléments à crampon (115) du composant tricoté.

6. Système de semelle (110) pour un article chaussant (100), le système de semelle comprenant :
un composant tricoté, le composant tricoté présentant une surface (114) faisant face au sol qui est réalisée de manière à faire face au sol, et une surface supérieure (113) tournée à l'opposé de la surface faisant face au sol,
le composant tricoté comprenant une pluralité d'éléments à crampon (115) qui font saillie de la surface faisant face au sol,
le composant tricoté étant continu entre chacun parmi la pluralité d'éléments à crampon, et
le système de semelle étant **caractérisé en ce qu'**une partie inférieure (111) du composant tricoté comprend un élément de traction inséré (3161), l'élément de traction (3161) étant positionné adjacent à au moins un élément à crampon (115) parmi la pluralité d'éléments à crampon (115) selon un sens longitudinal ou latéral du système de semelle (110).

7. Système de semelle (110) selon la revendication 6, la surface faisant face au sol (114) étant réalisée de manière à être en contact avec le sol.

8. Système de semelle (110) selon la revendication 6, la surface supérieure (113) étant réalisée de manière à être fixée à une tige (120) formée séparément du système de semelle.

9. Système de semelle (110) selon la revendication 6, chaque élément à crampon (115) parmi la pluralité d'éléments à crampon comprenant une cavité remplie d'une matière de renforcement (3410).

10. Procédé de fabrication d'un système de semelle (110) pour un article chaussant (100), le procédé comprenant :
le tricotage d'un composant tricoté présentant une partie inférieure (111) comprise dans le système de semelle, la partie inférieure du composant tricoté présentant une surface (114) faisant face au sol qui est réalisée de manière à faire face au sol, et une surface supérieure (113) tournée à l'opposé de la surface faisant face au sol,
la réalisation du composant tricoté de sorte qu'il présente une pluralité d'éléments à crampon (115) qui font saillie de la surface faisant face au sol,
le composant tricoté étant continu entre chacun parmi la pluralité d'éléments à crampon,
le procédé étant **caractérisé en ce que** la partie inférieure (111) du composant tricoté comprend au moins un élément de traction inséré (3161), l'élément de traction (3161) étant positionné adjacent à au moins un élément à crampon (115) parmi la pluralité d'éléments à crampon (115) selon un sens longitudinal ou latéral du système de semelle (110).

11. Procédé selon la revendication 10, comprenant en outre l'insertion d'un élément d'insertion (300) dans une tige (120) de l'article chaussant (100) de sorte qu'une saille qui s'étend depuis l'élément d'insertion est reçue par des cavités des éléments à crampon (115).

12. Procédé selon la revendication 11, comprenant en outre la formation sous vide de la partie inférieure (111) du composant tricoté autour d'un élément d'insertion (300) présentant une saillie (310) pour former les éléments à crampon (115).

13. Procédé selon la revendication 10, comprenant en outre l'injection d'une matière de renforcement (3410) dans des cavités des éléments à crampon (115).
